# EUROPEAN PATENT APPLICATION

(11) **EP 1 736 940 A1**
(43) Date of publication of application: **27.12.2006**
(21) Application number: 06011081.4
(22) Date of filing: 30.05.2006
(51) Int. Cl.: G07F 17/32

(54) **Player authentication device and player management server**

(30) Priority: 31.05.2005 JP 2005158414
(71) Applicant: Aruze Corporation, Tokyo 135-0063 (JP); Seta Corp., Koto-ku Tokyo 135-0063 (JP)
(72) Inventor: Nonaka, Nobuyuki, Tokyo (JP); Koyama, Toshimi, Tokyo (JP)
(74) Representative: HOFFMANN EITLE

(57) **Abstract**

A player authentication device includes specific information storage means (63, 73) for storing gaming machine specifying information to specify the gaming machine (10a) itself, an imaging means (24) for imaging a player (103), a player face image data generation means (61, 71) for extracting a face area or a specific portion of the player (103) based on an imaging result of the imaging means (24) to generate player face image data, and an output means (61, 64, 71, 74) for outputting the generated player face image data and the gaming machine specifying information.

## Description

### BACKGROUND OF THE INVENTION

### 1. Field of the Invention

The present invention relates to a player authentication device, a player management server, a gaming machine, and a sandwiched device for managing and authenticating players who play a plurality of gaming machines such as pachi-slot machines capable of stopping symbol varying and displaying by player's operation to award a specific winning combination, pachinko gaming machines, or other gaming machines.

### 2. Description of the Related Art

A gaming machine such as a so-called pachi-slot machine or a pachinko gaming machine has recently been equipped with various functions or devices for preventing or discovering player's fraud. Japanese Patent Laid-Open Publication No. 2004-154278 discloses a gaming machine which highlights a payline (a line for aligning symbols to award winning) of the gaming machine to notify fraudulent activity to a manager of a game arcade having the gaming machine installed therein upon detection of an electric wave when the gaming machine is improperly controlled by the electric wave.

### SUMMARY OF THE INVENTION

However, the gamingmachine as disclosed in Japanese Patent Laid-Open Publication No.2004-154278 has a disadvantage in that even when a player's fraud is discovered, if the player feels danger during fraudulent activity to quickly move away from the gaming machine, the fraudulent player cannot be caught, and he may commit a fraud again at another gaming machine. Thus, the manager or the like must make a note of facial features or the like of players playing a game to keep watch. However, as players frequently come and go out of the game arcade, constant watch over the players is difficult and burdensome work for the manager.

The present invention has been developed to solve the foregoing disadvantage. It is an obj ect of the present invention to provide a player authentication device, a player management server, a gaming machine, and a sandwiched device capable of watching players even without constant checking of the players by a manager or the like.

In order to achieve the obj ect, a first aspect of the present invention is summarized to be a player authentication device installed in a gaming machine designed to give a gaming value to a player based on a result of gaming, or in a sandwiched device disposed close to the corresponding gaming machine. The player authentication device includes a specific information storage means for storing gaming machine specifying information to specify the gaming machine itself, an imaging means for imaging the player, a player face image data generation means for extracting a face area or a specific portion of the player based on an imaging result of the imaging means to generate player face image data, and an output means for outputting the generated player face image data together with the gaming machine specifying information.

According to the first aspect of the present invention, as the player face image data obtained by imaging the player and the gaming machine specifying information are output outside the gaming machine, it is possible to specify which gamingmachine is played and what player is playing with a specific gaming machine. Thus, without any need to go near the gaming machine to check the player, a manager or the like of a game arcade can find out the player from a position away from the gaming machine.

The player authentication devices may be installed dispersedly within a gaming machine device in which a gaming machine body 10a and medal lending device 10b described below are integrally disposed. A configuration where the player authentication is arranged in the gaming machine body 10a (the gaming machine of the present invention) or a configuration where the player authentication is arranged in the medal lending device 10b (the sandwiched device of the present invention) may be properly employed. Hence, the configuration of the player authentication device of the present invention arranged in a so-called pachinko gaming machine or a slot machine as the gaming machine body 10a, and the configuration of the same arranged in the sandwiched device as the medal lending device 10b fall within a technical scope of the invention.

A second aspect of the present invention is summarized to be a player management server connected, to execute data communication, to the player authentication device installed in each of a plurality of gaming machines or sandwiched devices disposed close to the corresponding gaming machines. The player management server includes reception means for receiving the player face image data and the gaming machine specifying information, a storage means for storing the player face image data and the gaming machine specifying information in a correlated manner, a first determination means for determining whether the player face image data received from the player authentication device has been stored in the storage means, a detection means for detecting the gaming machine specifying information corresponding to the player face image data from the storage means when the received player face specifying data is determined to have been stored, a second determination means for determining whether the gaming machine specifying information received together with the player face image data matches with the gaming machine specifying information detected by the detection means, and a rewriting means for rewriting the gaming machine specifying information detected by the detection means with the received gaming machine specifying information when a determination result of the second determination means is negative.

According to the second aspect of the present invention, the determination is made as to whether the player face image data received from the gaming machine has been stored in the storage means. When the player face image data has been stored, and the gaming machine specifying information corresponding to the player face image data and the received gaming machine specifying information are not matched with each other, the gaming machine specifying information is rewritten. Thus, as the data of the storage means is rewritten when the players of the gaming machine are changed, each player who plays games with the gaming machine can be specified. Hence, at a game arcade where player changing is frequent, the manager or the like of the game arcade can specify the players without investing any time and labor.

A third aspect of the present invention is summarized to be a player authentication device for authenticating a player who plays games with a gaming machine designed to give a gaming value based on a gaming result. The player authentication device includes a data reader for reading face image data the player has registered beforehand from an ID recording medium inserted by the player, an imaging means for imaging a face of the player, a face image data generation means for extracting a face area or a specific portion of the player based on an imaging result of the imaging means to generate face image data, and an authentication means for collating the face image data generated by the player face image data generation means with the face image data read from the ID recording medium by the data reader to authenticate that the player is a player registered in the ID recording medium.

According to the third aspect of the present invention, by determining matching of the face image data obtained by imaging the player with the face image data read from the ID recording medium, it is possible to authenticate the player who plays games with the gaming machine. For example, the management side of the gaming machine can manage the players by managing the ID recording media, thereby facilitating the management of the players on the management side.

When the face image data of the player is registered in a server or the like which manages the gaming machine, and the player is authenticated by collation with the registered data, if the network which connects the server with the authentication device is in trouble, or the data is deleted to disable authentication, the player cannot be authenticated. However, by registering the face image data in the ID recording medium and executing authentication with the face image data therein, the player can be authenticated without any network passage. Moreover, when the number of players to be registered increases, data volume to be registered in the server also increases to necessitate much time and labor for data management. However, the data management is facilitated by recording data in an ID recording medium which each player can own.

A fourth aspect of the present invention is summarized to be employing a configuration where the player authentication device is incorporated in a gaming machine body 10a described below. There is provided a gaming machine, incorporating a player authentication device for authenticating a player who plays games with the gaming machine designed to give a gaming value to the player based on a gaming result. The gaming machine includes a specific information storage means for storing gaming machine specifying information to specify the gaming machine itself, an imaging means for imaging the player, a player face image data generation means for extracting a face area or a specific portion of the player based on an imaging result of the imaging means to generate player face image data, and output means for outputting the generated player face image data and the gaming machine specifying information.

According to the fourth aspect of the present invention, for example, the imaging means such as a CCD camera described below can be disposed on the front side of the gaming machine opposing the player in a state where the player plays with the gaming machine. Thus, as a possibility that face image data to be compared is taken from the front side of the player becomes increased when an authentication process is executed by the authentication means, it is possible to improve authentication accuracy, and to prevent disadvantage of authentication errors and others.

A fifth aspect of the present invention is summarized to be a configuration where the player authentication device is incorporated in a sandwiched device as a medal lending device 10b described below. There is provided a sandwiched device incorporating a player authentication device for authenticating the player who plays games with the gaming machine, and arranged close to a corresponding gaming machine designed to give a gaming value to a player based on a gaming result. The sandwiched device includes a specific information storage means for storing gaming machine specifying information to specify the gaming machine itself, an imaging means for imaging the player, a player face image data generation means for extracting a face area or a specific portion of the player based on an imaging result of the imaging means to generate player face image data, and output means for outputting the generated player face image data and the gaming machine specifying information.

According to the fifth aspect of the present invention, as the authentication function can be arranged in the sandwiched device configured separately from the gaming machine, the authentication function can be implemented no matter which gaming machine is placed close to the sandwiched device. Thus, by installing the sandwiched device near an existing gaming machine or the like, the authentication function can be widely employed in any old or new gaming machines.

### BRIEF DESCRIPTION OF THE SEVERAL VIEWS OF THE DRAWINGS

FIG. 1 is a schematic diagram of a hall system according to an embodiment of the present invention.
FIG. 2 is a schematic diagram of a gaming machine device shown in FIG. 1.
FIG. 3 is a schematic diagram of a counting device shown in FIG. 1.
FIG. 4 is a block diagram showing an electric configuration of the gaming machine device shown in FIG. 2.
FIG. 5 is a block diagram showing an electric configuration of the counting device shown in FIG. 3.
FIG. 6 is a block diagram showing an electric configuration of a hall computer shown in FIG. 1.
FIG. 7 is a diagram showing a demo screen displayed on a liquid crystal monitor according to the embodiment of the present invention.
FIG. 8 is a diagram showing a registration screen displayed on the liquid crystal monitor according to the embodiment of the present invention.
FIG. 9A is a diagram showing notification of registration completion according to the embodiment of the present invention.
FIG. 9B is a diagram showing notification of registration inhibition according to the embodiment of the present invention.
FIG. 9C is a diagram showing registration inhibition according to the embodiment of the present invention.
FIG. 10A is a diagram showing a mail creation screen displayed on the liquid crystal monitor according to the embodiment of the present invention.
FIG. 10B is a diagram showing notification of mail transmission completion according to the embodiment of the present invention.
FIG. 10C is a diagram showing notification of mail transmission inhibition according to the embodiment of the present invention.
FIG. 11 is a diagram showing a data table of player information stored in the hall computer according to the embodiment of the present invention.
FIG. 12 is a diagram showing a data table of gaming machine information stored in the hall computer according to the embodiment of the present invention.
FIG. 13 is a diagram showing a data table of employee information stored in the hall computer according to the embodiment of the present invention.
FIG. 14 is a flowchart of a gaming machine body main routine according the embodiment of the present invention.
FIG. 15 is a flowchart of a medal lending device main routine according to the embodiment of the present invention.
FIG. 16 is a flowchart of a registration process routine according to the embodiment of the present invention.
FIG. 17 is a flowchart of a mail transmission process routine according to the embodiment of the present invention.
FIG. 18 is a flowchart of a player authentication process routine according to the embodiment of the present invention.
FIG. 19 is a flowchart of a counting device side process routine according to the embodiment of the present invention.
FIG. 20 is a flowchart of a hall computer process routine according to the embodiment of the present invention.
FIG. 21 is a flowchart of an information registration process routine according to the embodiment of the present invention.
FIG. 22 is a flowchart of a player information update process routine according to the embodiment of the present invention.
FIG. 23 is a flowchart of a gaming machine information update process routine according to the embodiment of the present invention.
FIG. 24 is a flowchart of a counting person monitor process routine according to the embodiment of the present invention.
FIG. 25 is a flowchart of a mail transmission/reception process routine according to the embodiment of the present invention.

### DETAILED DESCRIPTION OF THE INVENTION

The preferred embodiments of the present invention are described below with reference to the accompanying drawings.

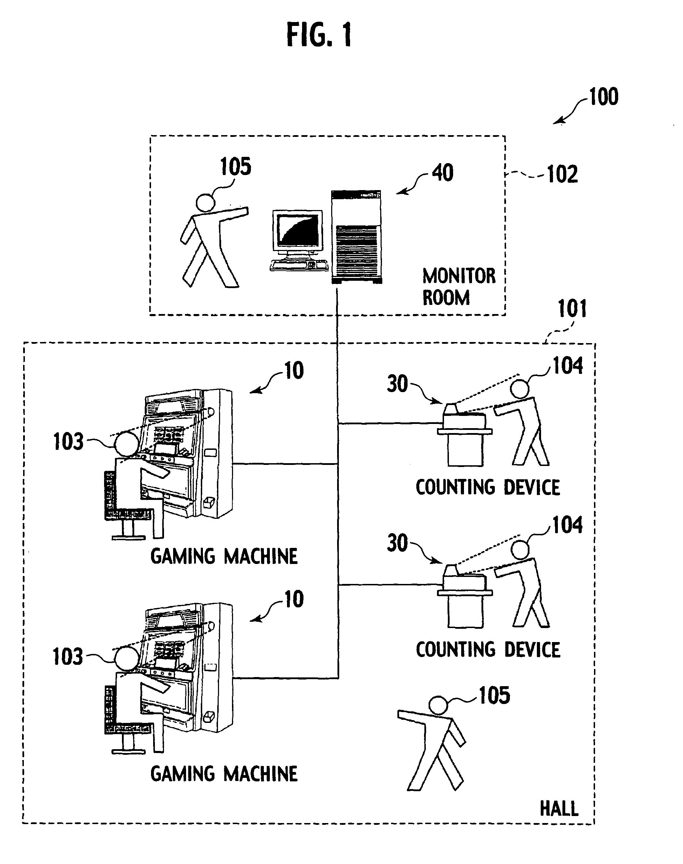

FIG. 1 is a schematic diagram of a hall system 100 according to an embodiment of the present invention. The hall system 100 includes a plurality of gaming machine devices 10 installed in a hall 101 (game arcade) to play games thereby obtaining gaming values according to results of the games and a plurality of counting devices 30 for counting the obtained gaming values. The hall system 100 includes a hall computer 40 (player management server) installed in a monitor room 102 to photograph faces of a player 103 who plays games with the gaming machine device 10 and a counting person 104 who counts a gaming value at the counting device 30 by a CCD camera to manage them. Only a manager and assistants (hereinafter referred to as employees) 105 of the hall 101 can enter the monitor room 102. All of the gaming machine devices 10, the counting devices 30, and the hall computer 40 are connected together by wire through HUB or the like (not shown) to enable data communication.

In the description below, the gaming machine device 10 of the embodiment of the present invention is a so-called "pachi-slot machine." The machine is configured to stop varying of the display by detecting an operation of the player 103, so that a specific winning combination can be established based on a plurality of varying symbols stopped to be displayed on a payline. A gaming value is a medal.

The gaming machine device 10 may be a so-called "pachinko gaming machine", or a device which allows playing by using a game medium such as a card storing information of a gaming value given to or to be given to the player in addition to coins, medals, or game balls. The gaming machine device 10, the counting device 30, and the hall computer 40 may be interconnected on the radio.

### (Gaming Machine Device)

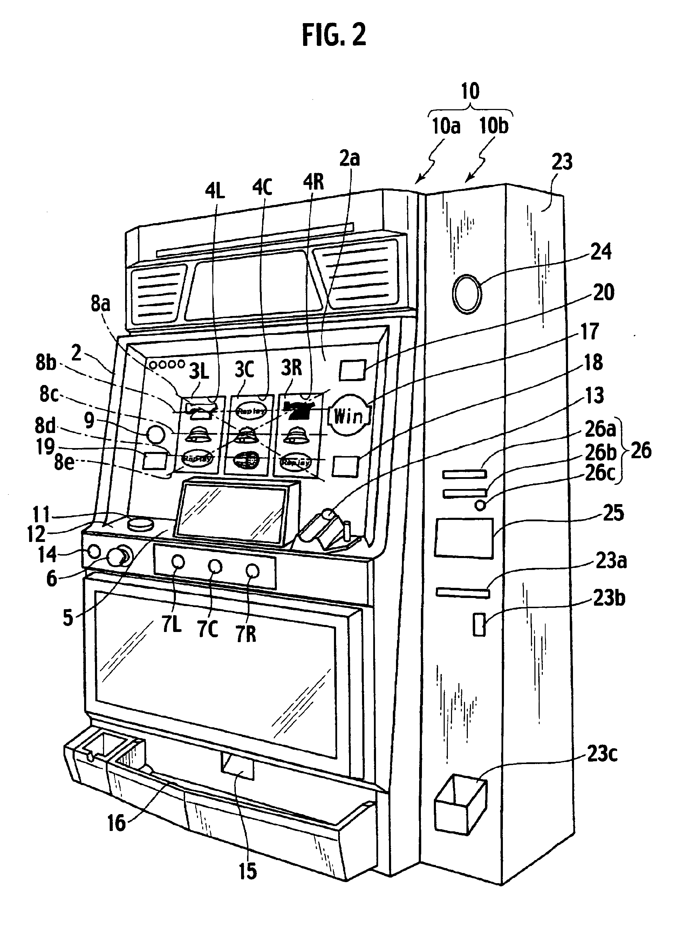

As shown in FIG. 2, the gaming machine device 10 includes a gaming machine body 10a and a medal lending device 10b which are integrally disposed, and a plurality of gaming machine devices 10 are installed in the hall 101. The player 103 (see FIG. 1) buys medals from the medal lending device 10b, plays games with the gaming machine body 10a by using the medals, and transfers mail with another player 103 at the other gamingmachine device 10 looking at a liquid crystal monitor 25 (described below) disposed in the medal lending device 10b to communicate with him. A CCD camera 24 is disposed in the medal lending device 10b to photograph the player 103. A face image of the photographed player 103 is managed by the hall computer 40 described below to enable to find out of each player 103 of the gaming machine devices 10. The CCD camera 24 corresponds to an imaging unit of the present invention. According to the embodiment of the present invention, the CCD camera 24 is disposed in the medal lending device 10b arranged close to the gaming machine body 10a, and the player positioned in front of the gaming machine body 10a can be photographed from an oblique direction by the CCD camera 24. However, to photograph the face of the player from the front thereof, the CCD camera 24 may be disposed at the front face of the gaming machine body 10a.

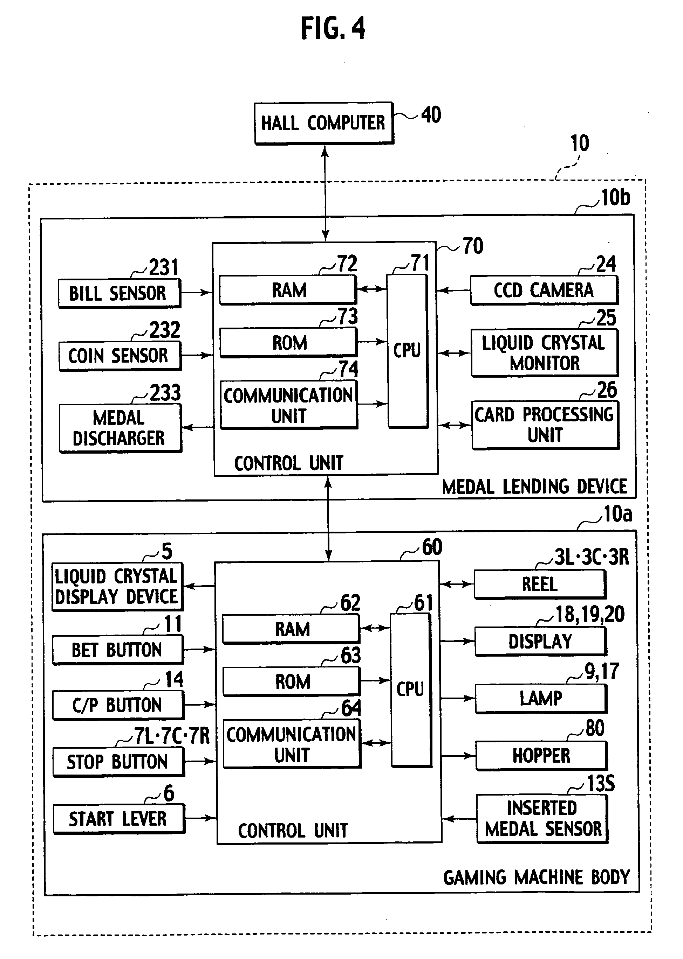

First, referring to FIGS. 2 and 4, the gaming machine body 10a of the gaming machine device 10 is described.

### (Gaming Machine Device: Gaming Machine Body)

As shown in FIG. 2, the gaming machine body 10a is constituted of a cabinet 2 as a whole. A panel display unit 2a is formed as a generally vertical surface in the front of the cabinet 2, and longitudinal rectangular display windows 4L, 4C and 4R are disposed in a center thereof. The display windows 4L, 4C and 4R can display a plurality of symbols of reels 3L, 3C and 3R respectively described below, i.e., 3 each in a longitudinal direction, i.e., totally 9 symbols. The display windows 4L, 4C and 4R include, as paylines, top, center and bottom lines 8b, 8c and 8d in a horizontal direction and cross-down and cross-up lines 8a and 8e in an oblique direction.

The top, center and bottom lines 8b, 8c and 8d are disposed to respectively cross upper, center and bottom stages of the display windows 4L, 4C and 4R. The cross-down line 8a is disposed to cross the upper stage of the display window 4L, the center stage of the display window 4C, and the bottom stage of the display window 4R. The cross-up line 8e is disposed to cross the bottom stage of the display window 4L, the center stage of the display window 4C and the upper stage of the display window 4R. These five paylines are activated by operating a BET button 11 described below or inserting 3 medals into a medal insertion slot 13.

The paylines 8a to 8e concern success of combination winning. Specifically, one symbol (e.g., "upper chili" described below) corresponding to a predetermined combination (e.g., "minor combination of upper chili" described below) is stopped to be displayed in a predetermined position corresponding to one of the activated paylines, or symbols constituting a symbol combination corresponding to a predetermined combination are stopped to be displayed side by side in a predetermined position corresponding to one of the activated paylines, whereby winning of the predetermined combination is established.

In the cabinet 2, three reels 3L, 3C and 3R are disposed horizontally in a row to rotate, and a symbol row constituted of a plurality of symbols is arranged in an outer peripheral surface of each of the reels 3L, 3C and 3R. The symbol row includes plural kinds of symbols having code numbers "00" to "20". Specifically, it includes symbols of "red 7", "blue 7", "lower chili", "bell", "watermelon", "replay", and "upper chili". As described above, the symbols of the reels can be viewed through the displaywindows 4L, 4C and 4R. Each reel rotates at a constant speed (e.g., 80 rpm). The "red 7" and the "blue 7" of the symbol row are set to constitute specific winning combinations. The specific winning combination means a winning combination where a bonus of BB or RB described below is awarded.

A BET lamp 9 and a credit display unit 19 are disposed on the left side of the display windows 4L, 4C and 4R. The BET lamp 9 lights when medals are bet to play one game. According to the embodiment, one game is finished when all the reels stop. The credit display unit 19 includes 7-segment LED, and displays the number of stored medals. A winning display lamp (so-called WIN lamp) 17 and a payout display unit 18 are disposed on the right side of the display windows 4L, 4C and 4R. The winning displaying lamp 17 basically lights until winning of BB or RB is awarded after winning of BB or RB becomes possible. The BB and RB are collectively referred to as "bonus" hereinafter. The payout display unit 18 includes 7-segment LED, and displays the number of paid-out medals when winning is awarded.

A bonus gaming information display unit 20 is disposed above the display lamp 17. The bonus gaming information display unit 20 includes 7-segment LED, and displays the number of games in a BB base gaming mode described below. A base portion of a horizontal surface is arranged below the display windows 4L, 4C and 4R. A liquid crystal display device 5 for displaying a performance screen by characters or the like is disposed between the base portion 12 and the display windows 4L, 4C and 4R.

A medal insertion slot 13 is disposed on the right side of the liquid crystal display device 5. An inserted medal sensor is disposed in the medal insertion slot 13 to count the number of inserted medals. A BET button 11 is disposed on the left side of the liquid crystal display device 5. The BET button 11 is pressed once to set three of credit medals as the number for betting a game. By operating this BET button 11, the five paylines 8a to 8e are activated.

On the left side of the front of the base portion 12, a C/P button 14 is disposed to switch credit/payout of medals which a player has won with a game by pressing the button. By switching of the C/P button 14, medals are paid out from a medal payout slot 15 at the front bottom side, and the paid-out medals are stored in a medal reception unit 16 disposed in the bottom part of the gaming machine body 10a. A start lever 6 is mounted to the right side of the C/P button 14. The start lever 6 is mounted to rotate within a predetermined angle range. A gaming start command signal is output by player' operation, and the reels 3L, 3C and 3R are rotated to start varying symbols in the display windows 4L, 4C and 4R. In positions below the liquid crystal display device 5 in the front center of the base portion 12, 3 stop buttons 7L, 7C and 7R are disposed to stop rotation of the three reels 3L, 3C and 3R.

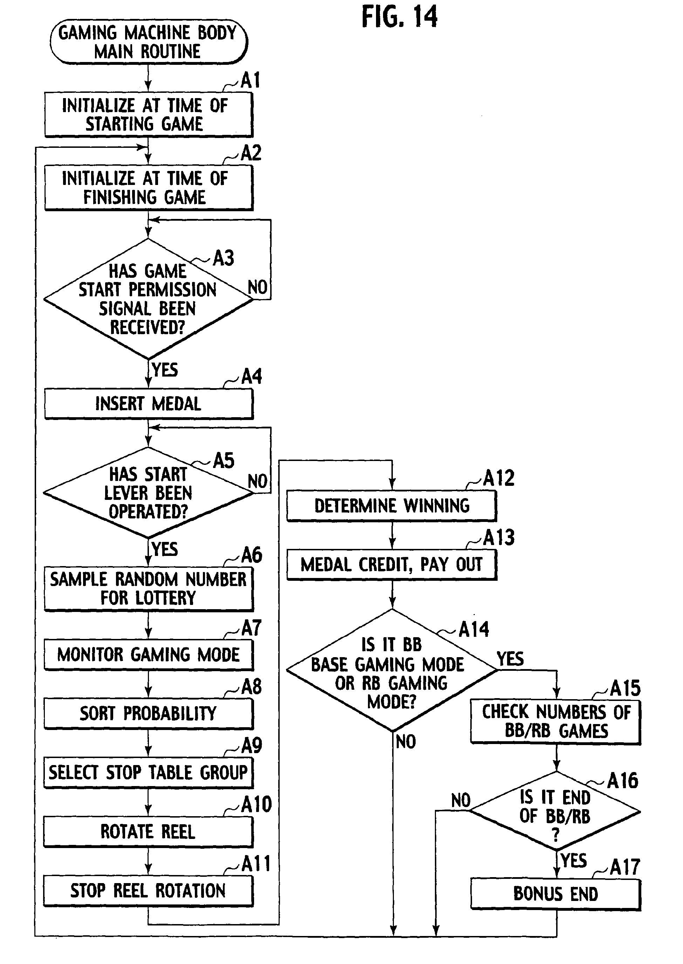

As shown in FIG. 4, the gaming machine body 10a thus configured includes a control unit 60. The control unit 60 has a microcomputer which includes a central processing unit (CPU) 61, a random access memory (RAM) 62, a read only memory (ROM) 63, a communication unit 64, and the like. The ROM 63 has a program area or the like to store a program or data of a process routine of FIG. 14 or the like. The RAM 62 temporarily stores data or the like used for data processing or the like of the program. The CPU 61 makes the program stored in the ROM 63 executable. The communication unit 64 can communicate data with the medal lending device 10b. The gaming machine body 10a is driven and controlled by the control unit 60 thus configured.

The start lever 6, the stop buttons 7L, 7C and 7R, the BET button 11, the C/P button 14, and the inserted medal sensor 13S are connected to the control unit 60, and the control unit 60 receives an input signal necessary for generating a control command responding to each operation. The reels 3L, 3C and 3R, and a hopper 80 are connected to the control unit 60 to be driven and controlled responding to the input signal or a gaming state. Specifically, the control unit 60 rotates the reels 3L, 3C and 3R when the start lever 6 is operated, and stops the reels 3L, 3C and 3R when the stop buttons 7L, 7C and 7R are operated. When the C/P button 14 is operated, the hopper 80 is driven, and the stored medals are paid out from the medal payout slot 15. When the number of medals paid-out from the hopper 80 reaches the designated number (number of stored medals) data, a medal payout completion signal is received from the hopper 80 to interrupt to close the hopper 80.

The control unit 60 bets three of the stored medals for a next game when the BET button 11 is operated. The inserted medal sensor 13S detects the medals inserted into the medal insertion slot 13. When the detection signal is received, the paylines 8a to 8e are activated. Then, upon reception of signals for detecting positions of the reels 3L, 3C and 3R therefrom, the control unit 60 detects symbols positioned on the paylines activated based on the signals to decide winning combinations.

Various lamps (BET lamp 9, WIN lamp 17), various display units (payout display unit 18, credit display unit 19, a bonus gaming information display unit 20), and the liquid crystal display unit 5 are connected to the control unit 60. The control unit 60 drives power or signals according to a gaming operation or the like to light various lamps or the display units, and makes the liquid crystal display device 5 to display a performance image.

A clock pulse generating circuit for generating a reference clock pulse, a frequency dividing circuit, a random number generator for generating random numbers to be sampled, and a sampling circuit are connected to the CPU 61 of the control unit 60. The random number generator generates random numbers within a predetermined number range. The sampling circuit samples one random number at the proper timing after an operation of the start lever 6. The CPU 61 decides an internal winning combination based on the random numbers sampled by the random number generating circuit and the sampling circuit and a probability sortition table stored in the ROM 63. The internal winning combination is a combination where winning can be awarded when a predetermined condition is satisfied.

The control unit 60 includes the communication unit 64 to enable data communication with the medal lending device 10b as described above, and exchanges data with the medal lending device 10b. Data transmitted to the medal lending device 10b is gaming information. The gaming information is information containing at least one of the number of medals (paid-out amount) paid out from the hopper 80 of the gaming machine body 10a and a current gaming mode described below. As described below in detail, the data transmitted to the medal lending device 10b is transmitted from the medal lending device 10b to the hall computer 40. The data received from the medal lending device 10b is a gaming start permission signal output when an ID card described below is inserted. In the gaming machine body 10a, this signal is received to enable gaming.

According to the embodiment of the present invention, the control unit 60 of the gaming machine body 10a is connected through the medal lending device 10b to the hall computer 40. However, the control unit 60 may be directly connected to the hall computer 40, or the control unit 60 may receive data from the medal lending device 10b to transmit the data to the hall computer 40.

In the gaming machine body 10a thus configured, three kinds of gaming modes, i.e., "base gaming mode", "RB gaming mode", and "BB base gaming mode", are permitted to appear. These "three kinds" of gaming modes are basically distinguished from one another based on a kind of a combination where internal winning is possible, a bonus kind where internal winning for replay is probable and winning can be established, and a relation between internal winning and winning establishment. Features of the gaming modes, i.e., a combination kind of internal winning in each gaming mode, its probability, stop control (combination kind of possible winning or the like) of the reels 3L, 3C and 3R in each gaming mode, are described below. Transfer between the gaming modes is executed when a combination of bonus symbols is displayed on the payline.

In the base gaming mode, BB winning is awarded when "blue7-blue7-blue7" or "red7-red7-red7" are aligned along an activated line. After the BB winning, the gaming mode becomes a BB base gaming mode. RB winning is awarded when "red7-red7-blue7" are aligned along an activated line in the base gaming mode, or when "replay-replay-replay" are aligned in a BB base gaming mode. RB winning in the BB base gaming mode is usually called "JACIN". After the RB winning, the gaming mode becomes an RB gaming mode.

Replay is awarded when "replay-replay-replay" are aligned in the base gaming mode. Upon establishment of replay, the number of medals equal to the number of inserted medals is automatically inserted, and thus the player can play a next game without consuming any medals. In the base gaming mode and the BB base gaming mode, winning establishments of "minor combination of upper chili", "minor combination of lower chili", "minor combination of bell", and "minor combination of watermelon" can be realized. In the base gaming mode, there is a possibility of winning in BB, RB, a minor combination of bell, a minor combination of watermelon, a minor combination of upper chili, and a minor combination of lower chili. When winning is replay, there is no medal payout. In the case of minor combinations of BB, RB, bell, watermelon, upper chili, and lower chili, 15, 15, 10, 3, 1 and 7 medals are respectively paid out.

In the RB gaming mode, combination winning is awarded when "replay-replay-replay", "red7-replay-replay" or "blue7-replay-replay" are aligned. A game of the RB gaming mode having a possibility of awarding combination winning is usually called a "JAC game".

Next, referring to FIGS. 2 and 4, the medal lending device 10b of the gaming machine device 10 is described.

### (Gaming Machine Device: Medal Lending device)

As shown in FIG. 2, the medal lending device 10b is integrally disposed on the side of the gaming machine body 10a thus configured, and has a case 23 as an outer wall formed into a generally rectangular parallelepiped shape and set narrower than the gaming machine body 10a in width. The medal lending device 10b includes a control unit 70 (described below) shown in FIG. 4 in the case 23, and it is driven and controlled by the control unit 70.

The case 23 includes, in the front thereof, a bill insertion slot 23a, a coin insertion slot 23b arranged therebelow, and a medal receiving portion 23c. The bill and coin insertion slots 23a and 23b include bill and coin sensors 231 and 232 for detecting inserted bills and coils, and they are connected to the control unit 70. Upon detection of bills and coins, the bill and coin sensors 231 and 232 supply inserted amount detection signals to the control unit 70. A medal payout unit 233 disposed in the case 23 to pay out medals is connected to the control unit 70. The control unit 70 pays out the predetermined number of medals equivalent to the inserted bills or coins to the receiving portion 23c based on the supplied inserted amount detection signals.

In the front upper part of the case 23, the CCD camera 24 is disposed to photograph the player 103 who sits in front of the gaming machine body 10a to play as shown in FIG. 1. A device for photographing the player 103 may be a CMOS camera, or other cameras. The CCD camera 24 is connected to the control unit 70, and image data captured by the CCD camera 24 is supplied to the control unit 70 as needed to be temporarily stored in the image RAM or the like. Then, by taking out the stored image data from the image RAM by desired timing, still image data imaged by the CCD camera 24 can be obtained. By processing described below of the control unit 70, a face profile (face area) of the player is extracted based on the obtained image data to generate face image data.

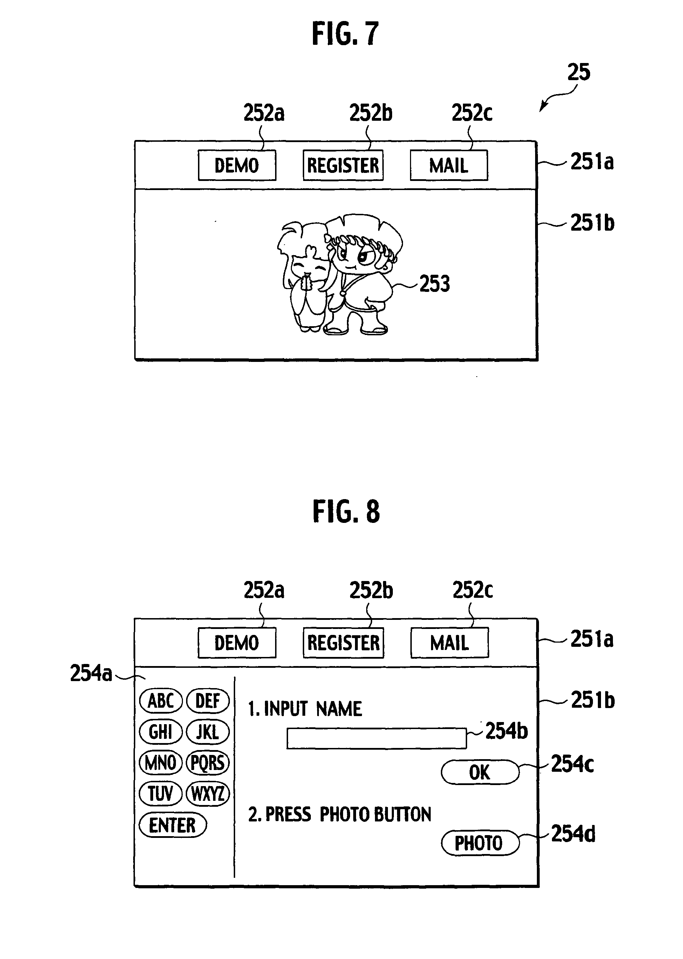

A liquid crystal monitor 25 for displaying screens shown in FIGS. 7 to 10 is disposed generally in a front center of the case 23. As described below in detail, by the liquid crystal monitor 25, the player can register his own name or face image, and exchange mails with the other gaming machine device 10. The liquid crystal monitor 25 is a so-called "touch panel" which reacts like a switch when a display on the screen is pressed, and characters or the like can be input when a mail is created or a name of player's own is input.

As described above, according to the embodiment of this invention, the liquid crystal monitor 25 equipped with the touch panel function is employed with the medal lending device 10b as the sandwiched device, and the mail is created. Not limited to this, however, a configurationmaybe employed where the liquid crystal display device 5 of the gamingmachine body 10a is provided with the same function as that of the liquid crystal panel 25 as a slot machine, and the player creates the mail while viewing the liquid crystal display device 5.

Above the liquid crystal monitor 25 in the front of the case 23, a cardprocessing unit 26 is disposed. The cardprocessing unit 26 includes a card issuance slot 26a for issuing an ID card (not shown), a card insertion slot 26b through which the ID card can be inserted/ejected, and a card ejection button 26c for ejecting the ID card inserted into the card insertion slot 26b. This ID card has an IC chip to store data. As described below in detail, upon completion of a registration process (described below) by the player 103, an ID card is issued from the card issuance slot 26a in a stored state of data (name and face image data described below) that the player has registered in the registration process in an IC chip. The embodiment of the present invention is described by presuming that the gaming machine body 10a can start a game by inserting the issued ID card into the card insertion slot 26b.

The CCD camera 24, the liquid crystal monitor 25, and the card processing unit 26 are connected to the control unit 70, and driven and controlled by the control unit 70.

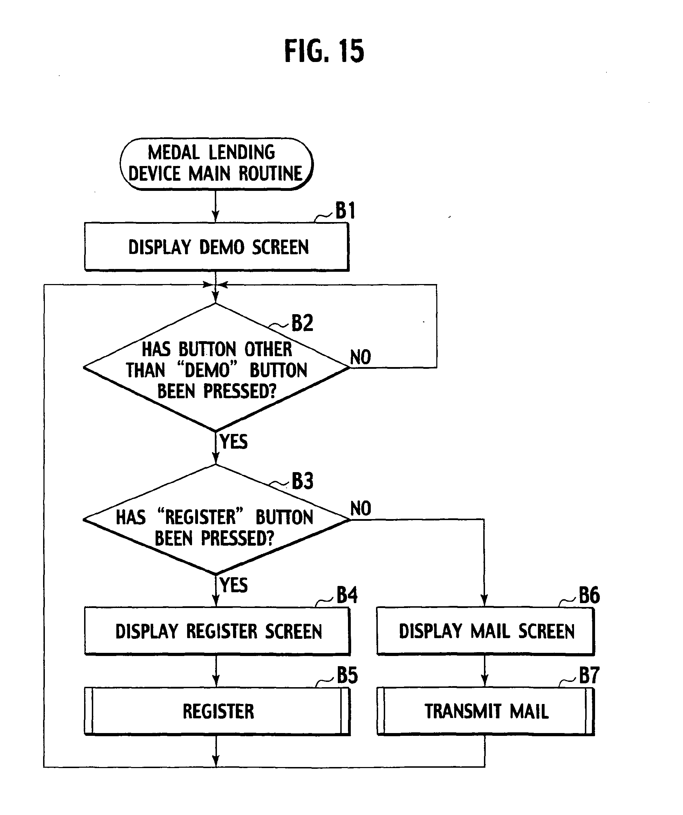

The control unit 70 has a microcomputer which includes a CPU 71, a RAM 72, a ROM 73, a communication unit 74, and the like. The ROM 73 has a program area or the like, and stores a machine number (gaming machine specifying information) allocated to programs of process routines of FIGS. 15 to 18 or the like and each gaming machine device 10 to specify each of the gaming machine devices 10. The RAM 72 temporarily stores data used for data processing of the programs, data (gaming information) transmitted from the gaming machine body 10a, data read from the ID card, or the like. The CPU 71 executes the programs stored in the ROM 73 to exert processing functions, and can execute the process routines of FIGS. 15 to 18. The communication unit 74 enables data communication with the control unit 60 of the gaming machine body 10a and the hall computer 40. A specific operation of the medal lending device 10b under control of the control unit 70 is described by referring to the process routines of FIGS. 15 to 18.

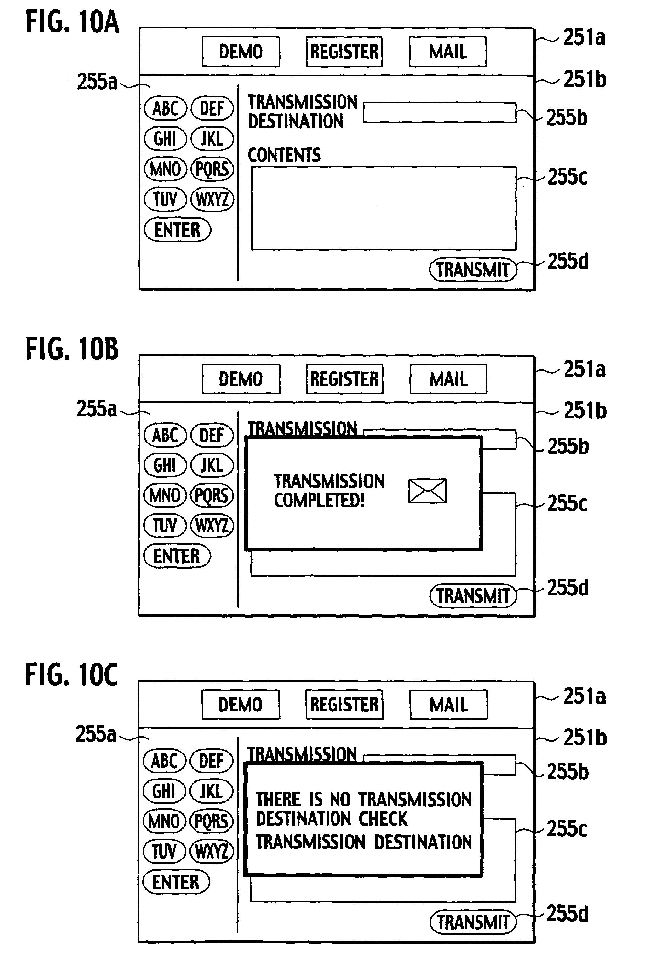

Now, a screen displayed on the liquid crystal monitor 25 is described. As shown in FIGS. 7 to 10, the liquid crystal monitor 25 is divided into a function selection screen area 251a and a main screen area 251b. A "demo" button 252a, a "register" button 252b, and a "mail" button 252c are displayed to be selected in the function selection screen area 251a. As described above, the liquid crystal monitor 25 is a touch panel, and by pressing a button part displayed, a corresponding signal is accordingly output. In the main screen area 251b, a demo screen of FIG. 7, a register screen of FIG. 8, and a mail creation screen of FIG. 10A are displayed according to operations of the buttons 252a to 252c.

When the "demo" button 252a is pressed, the demo screen of FIG. 7 is displayed in the main screen area 251b. For example, in the demo screen, a character 253 performs, or information in the hall is displayed.

When the "register" button 252b is pressed, the register screen of FIG. 8 is displayed in the main screen area 251b. The register screen is a screen for executing a registration process to register own name (identification information) or face image data (player face information) in the hall computer 40 and the ID card when the player 103 plays a game in the hall 101 for the first time.

In the register screen, a letter input screen 254a is displayed on the left side of the main screen area 251b. In the letter input screen 254a, "A to Z" keys for inputting alphabet, and a "decide" key for deciding an input are displayed to be selected, and letters can be input when a name is input to an input section 254b described below. The letter input screen 254a is an example, and any configuration can be employed as long as letters can be input. The embodiment of the present invention has been described by taking the example of inputting English characters. However, a configuration which enables letter/character inputting by another language (e.g., Japanese), or a plurality of languages can be employed.

An instruction screen is displayed on the left side of the main screen area 251b. In the instruction screen, an input section 254b and an OK button 254c for inputting the name of the player 103, and a photograph button 254d for driving the CCD camera 24 to photograph are displayed. The photograph button 254d is displayed not to be selected until the OK button 254c is operated. When the player 103 inputs his name to the input section 254b from each key of the letter input screen 254a, and presses the OK button 254c, the photograph button 254d can be selected. When the photograph button 254d is pressed, the player 103 is photographed by the CCD camera 24. Specifically, as described above, by operation timing of the photograph button 254d, image data is obtained from the image RAM storing the image data as needed.

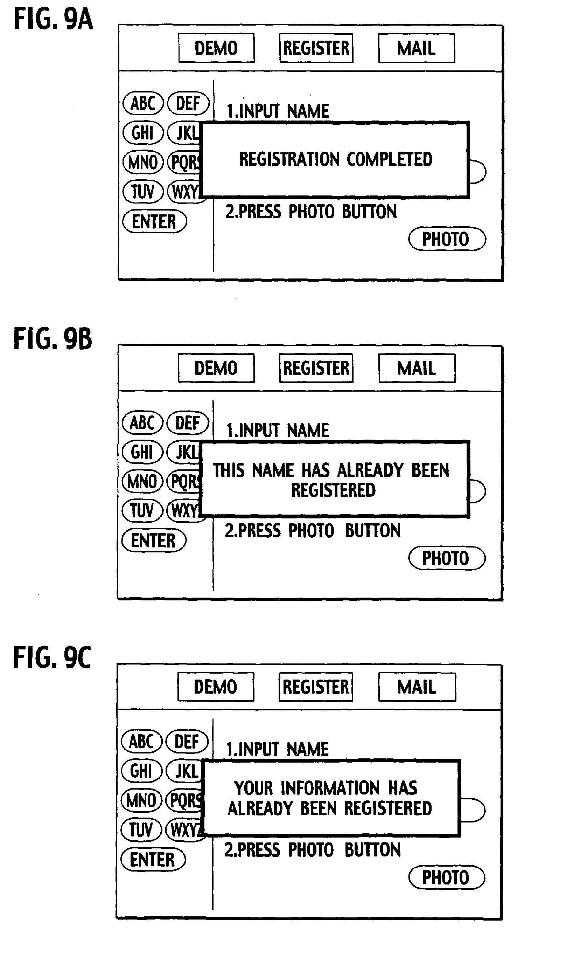

After the photographing, the input name or the face image data obtained by photographing is transmitted together with the machine number stored in the ROM 73 to the hall computer 40. Then, screens of FIGS. 9A to 9C are displayed according to registration results sent from the hall computer 40. Specifically, in the case of normal registration completion in the hall computer 40, as shown in FIG. 9A, a message that registration has been completed and an ID card has been issued from the card issuance slot 26a is displayed. If the input name has been registered by another player, as shown in FIG. 9B, a message that the name has been registered by another player is displayed. If the face image data obtained by photographing has been registered, in other words, if the player who carries out a current registration process has already performed a registration process, as shown in FIG. 9C, a message that the data has already been registered is displayed. After the displaying of the screens of FIGS. 9A to 9C, the demo screen of FIG. 7 is automatically displayed.

As long as a name to be input specifies a player, any name such as a real name or a handle name may be used. As described below, the input name is managed by the hall computer 40, and used as a transmission destination when mail is exchanged. If the name used as a mail transmission destination has been registered, by inputting another name, the mail can be surely transmitted to a target person.

When the "mail" button 252c is pressed, the mail creation screen of FIG. 10A is displayed in the main screen area 251b. The mail creation screen is a screen for creating mail when the player 103 transmits mail to a player who plays another gaming machine device 10. In the mail creation screen, a letter input screen 255a similar to the register screen is displayed on the left side of the main screen area 251b, and letters can be input during mail creation. A transmission destination section 255b for inputting a transmission destination of mail, a message section 255c for inputting mail contents, and a transmission button 255d are displayed on the right side of the main screen area 251b. The transmission destination input to the transmission destination section 255b is a name which each player 103 has input in the register screen. By pressing the transmission button 255d, contents input to the transmission destination section 255b and the message section 255c are transmitted to the hall computer 40.

The hall computer 40, upon reception of mail, transmits mail to the gaming machine device 10 corresponding to the name input to the transmission destination section 255b based on the player information described below. If the mail is normally transmitted, as shown in FIG. 10B, a message of transmission completion is displayed, and then the demo screen of FIG. 7 is displayed. If the mail is not transmitted, specifically, if the name input to the transmission destination section 255c has not been registered in the hall computer 40, as shown in FIG. 10C, a message for checking a transmission destination is displayed, and the mail creation screen of FIG. 10A is displayed again.

By setting the mail transmission destination to be a name registered by each player, for example, when a plurality of players come into the hall 101, names to be registered are decided before gaming, whereby each player can transmit mail without any need to always find out which gaming machine devices 10 the other players who have come together play with. Thus, the player can further concentrate on his own gaming.

The gaming machine device 10 that has received mail from the hall computer 40 displays the name of the player 103 who has transmitted mail and mail contents on the liquid crystal monitor 25 (not shown).

According to the embodiment of the present invention, the CCD camera 24 and the liquid crystal monitor 25 are disposed in the medal lending device 10b, and the face of the player 103 is authenticated at the medal lending device 10b. However, the device (CCD camera 24 or liquid crystal monitor 24) for the face authentication may be disposed in the gaming machine body 10a, and an authentication process or the like may be carried out by the control unit 60 of the gaming machine body 10a.

Next, the counting device 30 for counting medals obtained by the gaming machine device 10 is described.

### (Counting Device)

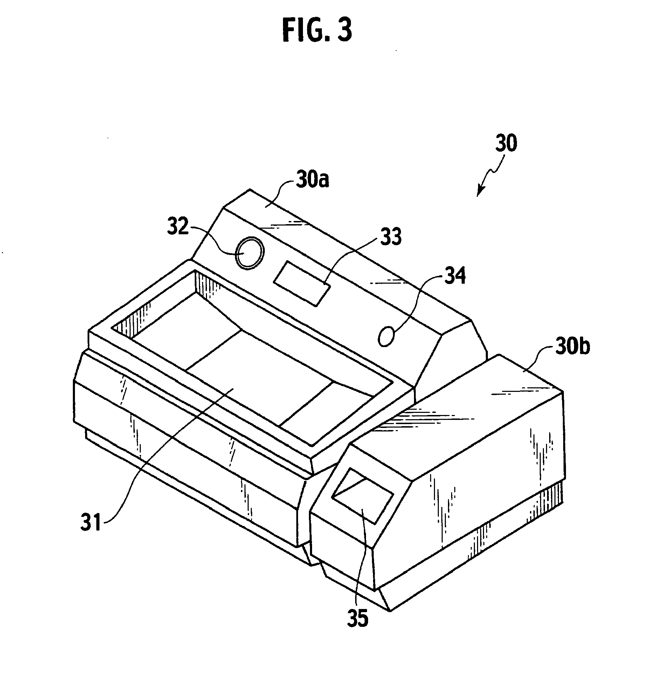

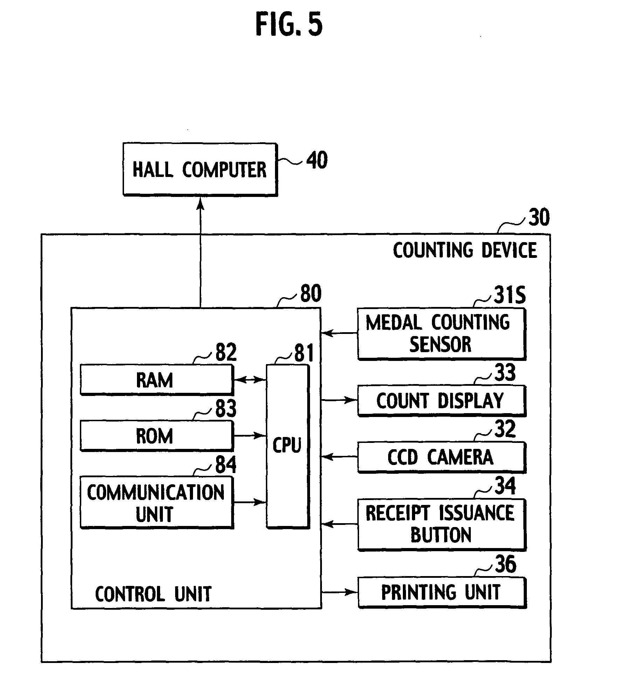

As shown in FIG. 3, the counting device 30 includes a counting body 30a and an issuance unit 30b, and it is driven and controlled by a control unit 80 disposed in the counting body 30a of FIG. 5. A medal receiving portion 31 having its upper part opened in the body case is disposed in the counting body 30a, and medals inserted into the medal receiving portion 31 are lined up in a counting path (not shown). The medal receiving portion 31 includes a medal counting sensor 31S connected to the control unit 80. Upon detection of medals passed through the counting path, the medal counting sensor 31S supplies a detection signal to the control unit 80. The control unit 80 inputs the detection signal to a counter to count the number of medals.

A CCD camera 32 for photographing a counting person 104 is disposed in an upper part of the counting body 30a. The CCD camera 32 is similar to the CCD camera 24, and thus description thereof is omitted. On the right side of the CCD camera 32 disposed in the counting body 30a, a count display 33 for displaying the count value of all inserted medals, and a receipt issuance button 34 for causing the issuance unit 30b to print a counting result are provided, and connected to the control unit 80.

The issuance unit 30b is integrally disposed on the side of the counting body 30a, and a receipt discharge slot 35 is disposed in a case front. A printing unit 36 that includes a printing portion for printing a receipt (not shown) and a discharge portion for discharging a receipt from the receipt discharge slot 35 are disposed. By pressing the receipt issuance button 34, a receipt having a counting result printed therein is discharged from the receipt discharge slot 35.

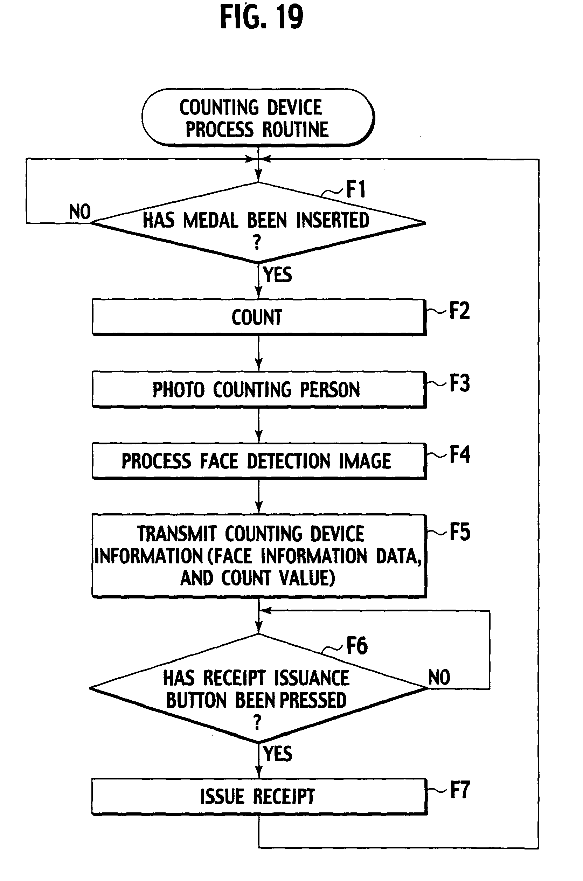

The control unit 80 is a microcomputer which includes a CPU 81, a RAM 82, a ROM 83, a communication unit 84 which enables data communication with the hall computer 40, and the like. The ROM 83 has a program area or the like, and stores a program of each process routine of FIG. 19 or data. The RAM 82 temporarily stores data or the like used for program data processing or the like. The CPU 81 executes the program stored in the ROM 83. A specific operation of the counting device 30 under control of the control unit 80 is described below by referring to the process routine of FIG. 19.

Next, description is made of the hall computer 40. The hall computer 40 is connected to the gaming machine device 10 and the counting device 30 to execute data communication, and monitors players coming into the hall 101 based on data transmitted from the gaming machine device 10 and the counting device 30.

### (Hall Computer)

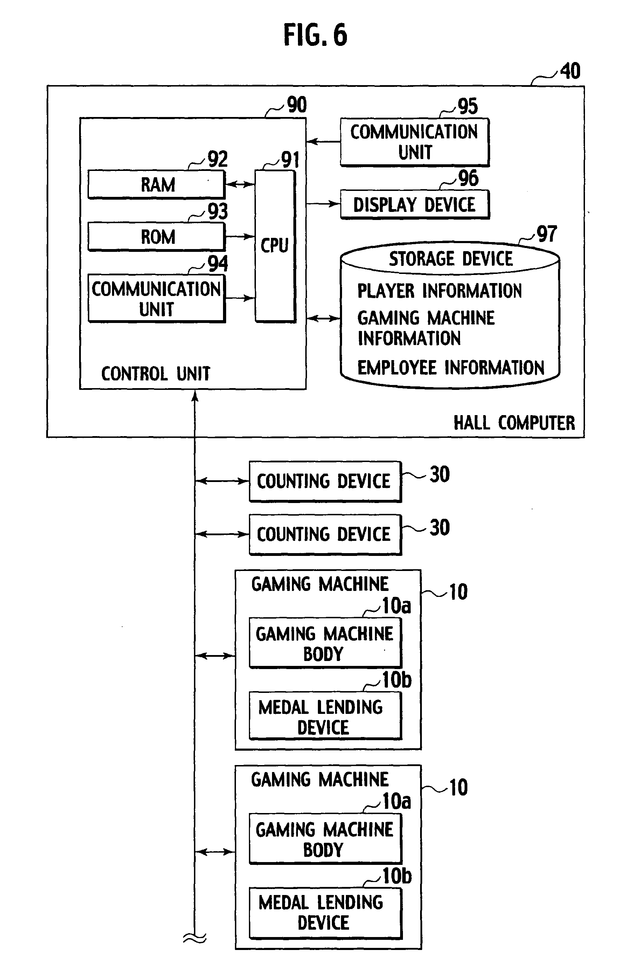

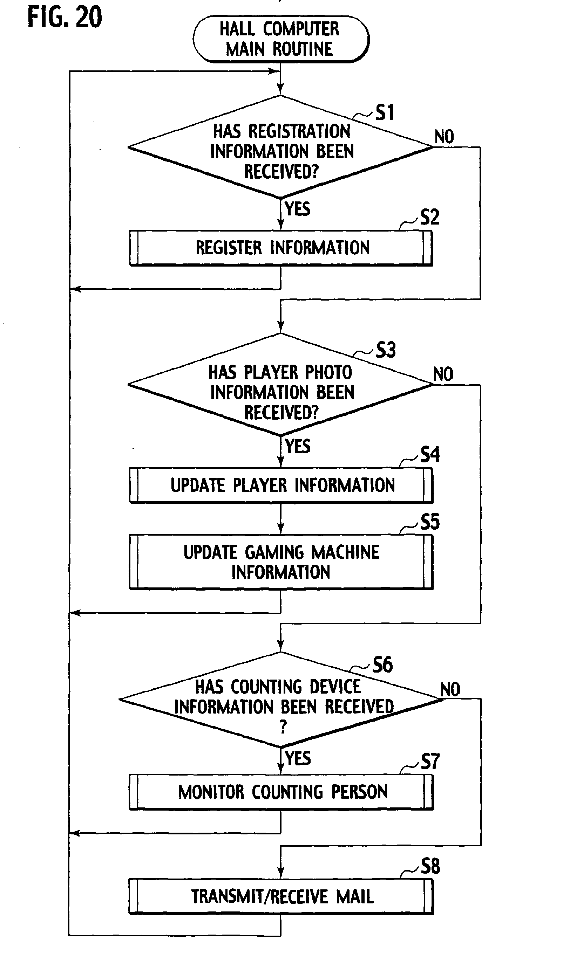

The hall computer 40 interconnects the gaming machine device 10 and the counting device 30 to enable data communication, and receives various data. As shown in FIG. 6, the hall computer 40 includes a control unit 90 constituted of a microcomputer. The microcomputer includes a CPU 91, a RAM 92 used for program data processing or the like, a ROM 93 for storing programs or data of process routines of FIGS. 20 to 25, a communication unit 94 for enabling data communication with the gaming machine device 10 and the counting device 30, and the like. The hall computer 40 executes various control processes and computing operations.

A processing command and data such as employee information described below are input to the control unit 90. For example, an operation unit 95 such as a keyboard or a mouse, and a display device 96 such as a CRT monitor are connected. The CRT monitor displays a management state of the player or the gaming machine device 10 or notifies fraudulent activity or the like to an employee 105 or the like according to each processing result described below. A large-capacity storage device (storage device hereinafter) 97 is connected to the control unit 90. The storage device 97 stores player information, gaming machine information, and employee information. Data of each information is retrieved, and new data is written or overwritten by the control unit 90.

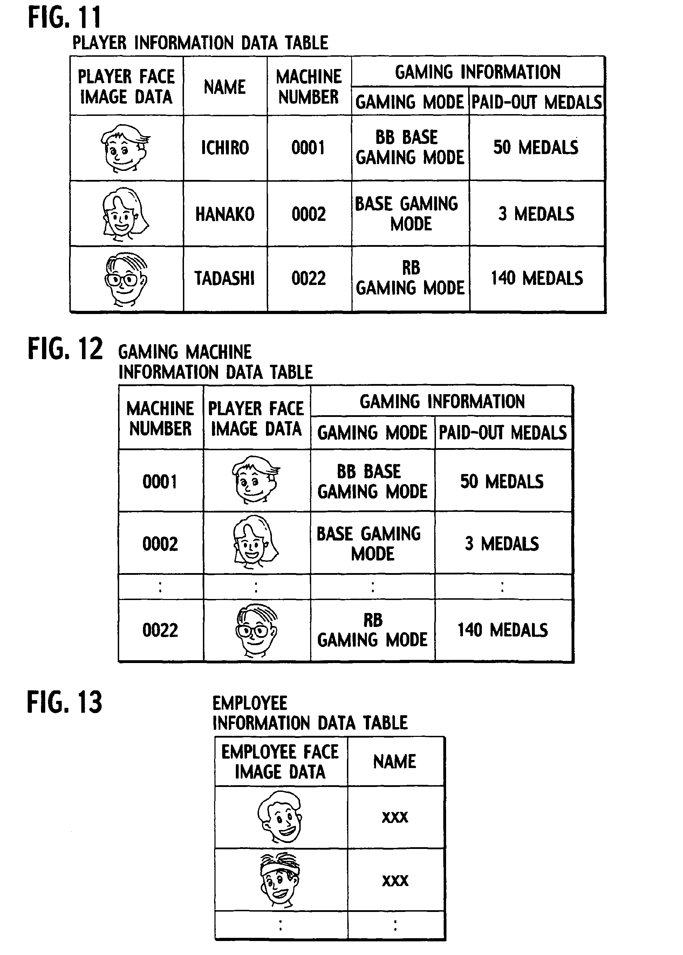

In the case of the player information, as shown in FIG. 11, player data containing face image data, a name, a machine number and gaming information (gaming mode/number of paid-out medals) of a player transmitted from the gaming machine device 10 is stored in a form of a data table. The machine number and the gaming information of the player data are rewritable, and rewritten according to data received from the gaming machine device 10. The data table of the player information is used when the gaming machine device 10 currently played by the player is specified, the number of paid-out medals, i.e., the number of medals or the like obtained by the player, is found out.

In the case of the gaming machine information, as shown in FIG. 12, gaming machine data containing a machine number, face image data of a player, and gaming information is stored in a form of a data table in the storage device 97. The face image data and the gaming information of the gaming machine data are rewritable, and rewritten according to data received from the gaming machine device 10. The data table of the gaming machine information is used when a face of a player playing the gaming machine device 10, or a current gaming mode is found out.

In the case of the employee information, as shown in FIG. 13, data containing face image data and a name of an employee 105 of the hall 101 is stored in a form of a data table. The data table of this employee information is used when determination is made as to whether the counting person 104 counting medals by the counting device 30 is an employee 105.

An information process using the data table of each information by the control unit 90 is described below in detail by referring to the process routines of FIGS. 20 to 25.

Operations of the gaming machine device 10, the counting device 30, and the hall computer 40, which constitute the hall system 100 is described.

### (Gaming Machine Body Main Routine)

Referring to a flowchart of FIG. 14, a control operation process in the gaming machine body 10a of the gaming machine device 10 is described. The control unit 60 of the gamingmachine body 10a first executes initialization at the time of starting gaming (A1). Specifically, initialization of stored contents in the RAM 62, or of communication data is executed. Subsequently, predetermined stored contents of the RAM 62 at the time of a gaming end are deleted (A2). Specifically, data of a writable area of the RAM 62 used for a previous game is deleted, a parameter necessary for a next game is written in a writable area of the RAM 62, a start address of a sequence program of a next game is designated, or the like.

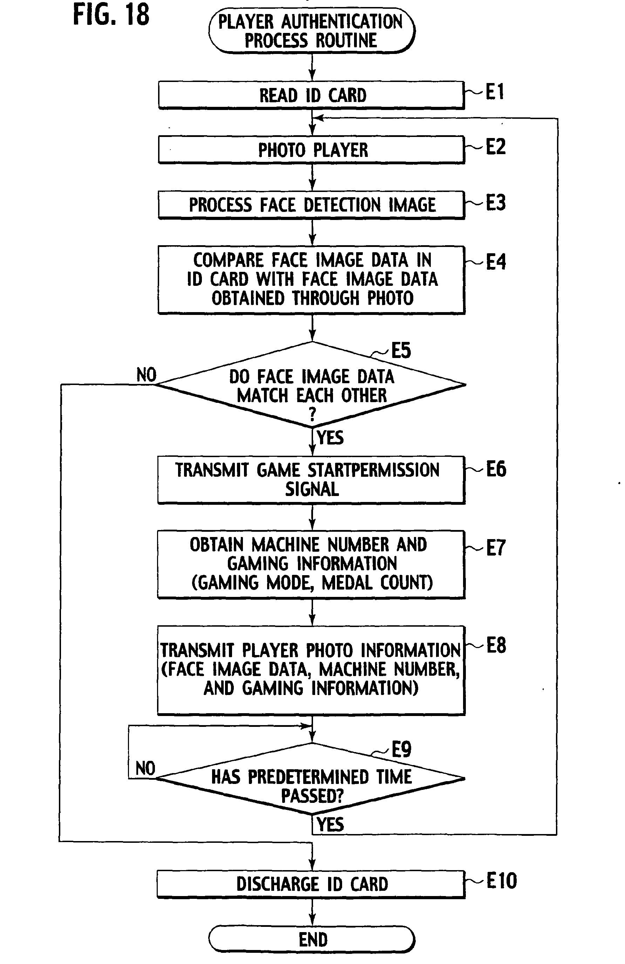

Next, determination is made as to reception of a game start permission signal from the medal lending device 10b (A3). As detailed below in the description of a player authentication process routine of FIG. 18, the game start permission signal is a signal transmitted from the medal lending device 10b when an ID card is inserted by the player, and face image date stored in the ID card matches the face image data obtained by photographing of the CCD camera 24. This signal is transmitted as long as the ID card is kept inserted. If the game start permission signal has not been received (A3: NO), the process stands by until reception. If a game start permission signal has been received (A3: YES), the process proceeds to A4.

Next, a standby state is set until a signal input from the inserted medal sensor 13S or the BET button 11 (A4) comes. Subsequently, determination is made as to an operation of the start lever 6 (A5). In other words, the control unit 60 determines whether a game start command signal has been received. If the start lever 6 has not been operated (A5: NO), A4 is repeated to set an input standby state. If the start lever 6 has been operated (A5: YES), a sortition random number is extracted (A6) . By executing a gaming mode monitor process, a gaming mode of a current game is checked (A7). In other words, the gaming mode of the current game is set to one of a BB base gaming mode, an RB gaming mode, and a base gaming mode. In this case, the set gaming mode is transmitted to the medal lending device 10b.

A probability sortition process is executed (A8) to decide an internal winning combination. Subsequently, a stop table group selection process is executed (A9). Specifically, a specific stop table group is selected by using a type of an internal winning combination. The stop table group is used when the reels 3L, 3C and 3R are stopped in A10. Then, a reel rotation process is executed (A10). Specifically, the reels 3L, 3C and 3R are rotated.

Next, a reel rotation stop process is executed (A11). In other words, a sliding-symbol-number deciding process is executed to decide the number of sliding symbols by timing when one of the stop buttons 7L, 7C and 7R is pressed or timing when a value of an automatic stop timer becomes "0". Specifically, the number of sliding symbols is decided based on a stop table decided (selected) in A10, a stop operation position, and a stop control position. "Number of sliding symbols" is the number of symbols moved until a main reel stops after the operation of the stop button. In other words, "Number of sliding symbols" is moving amount (moving distance) of a symbol until the main reel stops. Subsequently, the main reel corresponding to the operated stop button is rotated by an amount equal to the number of sliding symbols to be stopped.

Next, winning determination is executed (A12). The winning determination is to identify a winning combination (combination establishing winning) based on a stop mode of each symbol of the reels 3L, 3C and 3R at a center line 8c. Then, obtained medals are kept on credit or paid out (A13). Specifically, in the case of obtaining medals by winning, the number of obtained medals is displayed on the payout display unit 18. When the C/P button 14 is switched by the player, the player select to decide whether to keep the obtained medals on credit in the gaming machine body or to pay out the medals from the medal payout slot 15. The medals kept on credit can be bet by pressing the BET button 11 in a next game. When a winning combination is determined to be BB or RB, a BB base gaming mode or an RB gaming mode is generated. In this case, the number information on paid-out medals is transmitted to the medal lending device 10b.

Then, determination is made as to which of a "BB base gaming mode" and an "RB gaming mode" a current gaming mode is (A14). If the gaming mode is neither a "BB base gaming mode" nor an "RB gaming mode" (A14: NO), the process returns to A2. If the gaming mode is one of the "BB base gaming mode" and the "RB gaming mode" (A14: YES), a "gaming number checking process" of a bonus (BB, RB) is executed (A15). In this "gaming number checking process", the number of RB gaming mode generating times, the number of BB base gaming mode gaming times, the number of RB gaming mode winning times, and the number of RB gaming mode gaming times are checked, and a gamingmode is transferred (set) between the BB base gaming mode and the RB gaming mode.

Next, determination is made as to an end of a bonus (A16) or not. Specifically, after BB winning, determination is made as to whether the number of winning times is 8 or the number of gaming times is 12 in a third RB gaming mode, or whether the number of gaming times is 30 in the BB base gaming mode. After RB winning by aligning "red7-red7-blue7" along an activated line, determination is made as to whether the number of winning times is 8 or whether the number of gaming times is 12 in the RB gaming mode. As a result, if determined to be not in the end of bonus (A16: NO), the process returns to A2. On the other hand, if determined to be the end of bonus (A16: YES), the bonus is finished (A17) to return to A2.

### (Medal Lending device Main Routine)

Referring to a flowchart of FIG. 15, an operation process in the control unit 70 of the medal lending device 10b is described. The control unit 70 of the medal lending device 10b executes a medal lending device main routine shown in FIG. 15. That is, first, the demo screen of FIG. 7 is displayed on the liquid crystal monitor 25 (B1). Then, on the demo screen, determination is made as to whether a button other than the "demo" button 252a displayed in the function selection area 251a (B2) has been pressed. If the button other than the "demo" button 252a has not been pressed (B2: NO), i.e., if the "demo" button 252a has been pressed or nothing has been operated, the process returns to B1 to continuously display the demo screen on the liquid crystal monitor 25.

If the button other than the "demo" button 252a has been pressed (B2: YES), determination is made as to whether the "register" button 252b (B3) has been pressed. If the "register" button 252b has been pressed (B3: YES), the register screen of FIG. 8 is displayed on the liquid crystal monitor 25 (B4) to subsequently execute a registration process (B5).

### (Registration Process Routine)

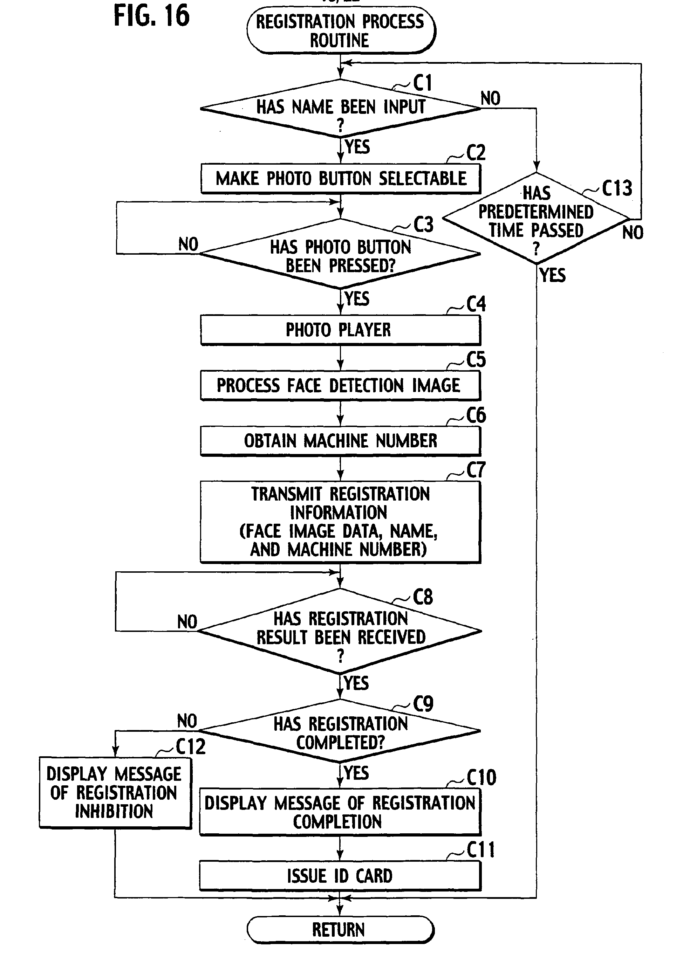

In the registration process (B5), a registration process routine shown in FIG. 16 is executed. First, on the register screen, determination is made as to inputting of a name (C1). Specifically, determination is made as to whether a name of a player has been input to the input section 254b of FIG. 8 and whether the OK button 254c has been pressed. If the name has not been input (C1: NO), determination is made as to passage of predetermined time after the displaying of the register screen (C13). If the predetermined time has not passed (C13: NO), the process returns to C1. If the predetermined time has passed (C13: YES), the routine is finished to return to B1 of FIG. 15 thereby displaying the demo screen

In C1, if the name has been input (C1: YES), the photograph button 254d of the register screen is made selectable (C2). As described above, the photograph button 254d is made selectable when the name is input and the OK button 254c is operated. Then, determination is made as to pressing of the photograph button 254d (C3). If the photograph button 254d has not been pressed (C3: NO), the process stands by until it is pressed. If the photograph button 254d has been pressed (C3: YES), the player is photographed by the CCD camera 24 (C4). Specifically, image data is supplied from the CCD camera 24 to the control unit 70 as needed to be temporarily stored in the image RAM. The image data is obtained from the image RAM by timing when the photograph button 254d is operated. Accordingly, it is possible to obtain image data of the player photographed by the CCD camera 24.

Next, a face detection image process is executed (C5). The face detection image process is for extracting a face area of a player from an obtained image data by a well-known method to obtain face image data. For example, to extract a face feature which becomes a face element candidate, a face search area is detected by using color information to extract a flesh-color area. As a method of extracting the flesh-color area, for example, there is a method of determining whether a color tone and a gradation of a certain pixel are in color tones and gradation of a predetermined range enabling determination of a face flesh color, making similar determination as to a pixel adjacent to the pixel when the face flesh color is determined, sequentially making repeated determinations to expand a flesh color area, and thereby extracting a face area. After the extraction of the flesh color area, by eliminating flesh color areas other than the face based on a size or shape of the extracted area, the face area can be accurately extracted. Image data of the extracted face area is obtained as face image data. Image data only extracting a specific face portion (e.g., nose or eyes) from the obtained image data may be obtained as face image data.

Subsequently, the machine number stored in the ROM 73 is obtained (C6). Then, the register information containing the face image data obtained in the face detection image process of C5, the obtained machine number, and the input name is transmitted to the hall computer 40 (C7), and determination is made as to whether a registration result from the hall computer 40 (C8) has been received. The registration result is information for notifying a result of normal registration completion of the player on the hall computer 40 side. If the registration result has not been received (C8: NO), the process stands by until it is received.

If the registration result has been received (C8: YES), determination is made as to completion of registration from the received registration result (C9). If the registration has not been completed (C9: NO), specifically, if the registration has not been completed because the name input to the input section 254b has already been input to the hall computer 40 or because the face image data obtained by photographing has been registered, the routine is finished after a message that the name has been input as shown in FIG. 9B or a message that it has been registered as shown in FIG. 9C is displayed (C12). Then, the process returns to B1 of FIG. 15 to display the demo screen. If the registration has not been completed, the register screen of FIG. 8 may be displayed again.

If the registration has been completed (C9: YES), as shown in FIG. 9A, a message indicating registration completion is displayed (C10), the name and the face image data of the registration information is stored in an embedded IC chip, and a new ID card is issued from the card issuance slot 26a (C11). Then, the routine is finished, and the process returns to B1 of FIG. 15 to display the demo screen.

In the face detection image processing of the registration process routine, when face image data of the player cannot be generated, displaying may be executed on the liquid crystal monitor 25 to cause the player to photograph again. In this case, image data of the player can be more certainly obtained.

In FIG. 15, if it is determined that the "register" button 252b has not been pressed in B3 (B3: NO), the mail creation screen of FIG. 10A is displayed on the liquid crystal monitor 25 judging that the "mail" button 242c has been pressed (B6). Then, a mail transmission process is executed (b7).

### (Mail Transmission Process Routine)

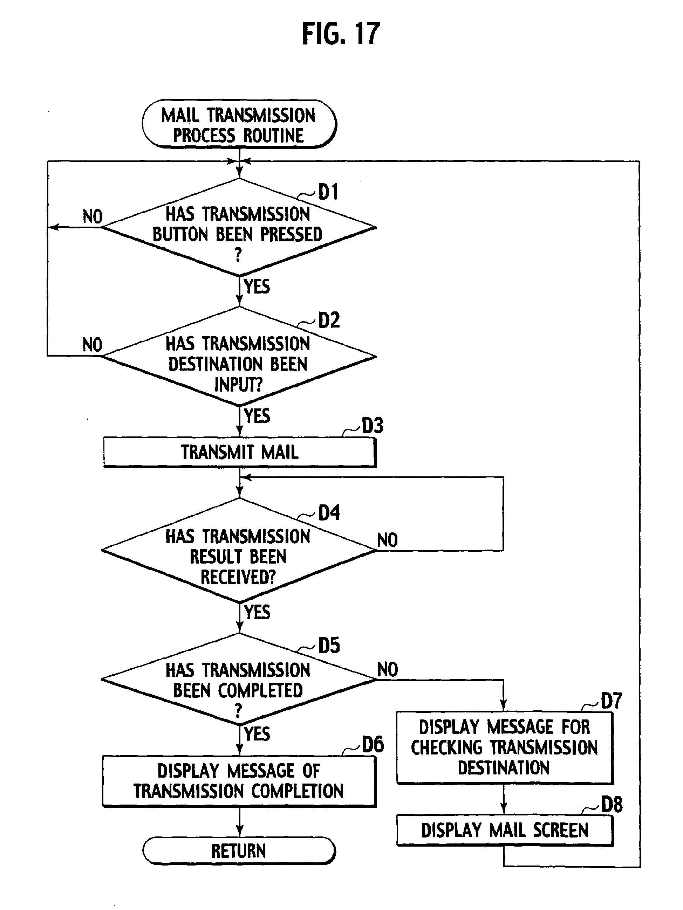

In the mail transmission process (B7), a mail transmission routine shown in FIG. 17 is executed. First, determination is made as to pressing of the transmission button 255d displayed on the mail transmission screen (D1). If the button has not been pressed (D1: NO), the process stands by until it is operated. If the transmission button 255d has been pressed (D1: YES), determination is made as to whether a transmission destination has been input to the transmission destination section 255b (D2). If no transmission destination has been input (D2: NO), the process returns to D1. In this case, a message to prompt inputting of a transmission destination may be displayed. If a transmission destination has been input (D2: YES), contents input to the transmission destination section 255b and the message section 255c are transmitted to the hall computer 40 (D3). Mail transmitted in this case contains the machine number stored in the ROM 72, thus the gaming machine device 10 that has transmitted the mail can be specified by the hall computer 40.

Next, determination is made as to reception of a transmission result on whether the transmission of the mail from the hall computer 40 to the gaming machine device 10 of the transmission destination (D4) is normal. If no transmission result has been received (D4: NO), the process stands by until it is received. If a transmission result has been received (D4: YES), determination is made as to completion of the mail transmission from the transmission result (D5). If the transmission has not been completed (D5: NO), specifically, if the mail cannot be transmitted because the name input to the transmission destination 255b has not been registered in the hall computer 40, as shown in FIG. 10C, a message to prompt to check the transmission destination is displayed (D7), and the process returns to D1 after the mail creation screen of FIG. 10A is displayed (D8). If the transmission has been completed (D5: YES), as shown in FIG. 10B, a message indicating completion of the transmission is displayed (D6) to finish the routine. Then, the process returns to B1 of FIG. 15 to display the demo screen.

### (Player Authentication Process Routine)

The control unit 7 0 of the medal lending device 10b executes the main routine of FIG. 15, and a player authentication process upon insertion of an ID card into the card insertion slot 26b. In the player authentication process, the player authentication process of FIG. 18 is executed. First, data, i.e., face image data, stored in an IC chip of the inserted ID card is read (E1) . In this case, the read data is temporarily stored in the RAM 72. Next, the player is photographed by the CCD camera 24 (E2), a face detection image process similar to the above is executed, and face image data is obtained from a photographing result (E3). The face image data read from the ID card is compared with the face image data obtained in the face detection image process (E4). Determination is made as to matching between the face image data read from the ID card and the face image data obtained in the face detection image process (E5). Specifically, the face image data are collated with each other by a well-known method to calculate a similarity thereof. Matching of both data is determined if the similarity is equal to ormore than a threshold value. Nonmatching is determined if the similarity is less than the threshold value.

If the face image data do not mach each other (E5: NO), by judging that the player who is going to play with the gaming machine device 10 is not a player registered in the ID card, the ID card inserted into the card insertion slot 26 is forcibly discharged (E10) to finish the routine. In other words, the player who has inserted the ID card can no longer start a game. Thus, by authenticating the player based on the collation of the face image data registered in the ID card, it is not necessary to transmit the face image data obtained by photographing the player to the hall computer 40. For example, even in a communication disable state with the hall computer 40 due to a trouble or the like in the network, the player can be authenticated.

If the face image data match each other (E5: YES), a game start permission signal is transmitted to the gaming machine body 10a (E6). Accordingly, in the gaming machine body 10a, gaming can be started. This game start permission signal is continuously transmitted until the ID card is discharged. Next, the machine number and the gaming information (gaming mode, number of paid-out medals) stored in the RAM 72 are obtained (E5). Then, the player photograph information containing the face image data obtained in E3, the machine number and the gaming information is transmitted to the hall computer 40 (E8). Thus, in the hall computer 40, the player who currently plays the gaming machine device 10 can be found out.

Subsequently, determination is made as to passage of predetermined time after the player is photographed by the CCD camera 24 (E9). If the predetermined time has not passed (E9: NO), the process stands by until the predetermined time passes. If the predetermined time has passed (E9: YES), the process returns to E3 to repeat the above operation. This routine is finished when the card eject button 26a is operated, and the ID card is discharged. Accordingly, as the player is photographed for each predetermined time while the ID card is inserted, even when the player changes during gaming, it can be quickly found out. Thus, for example, when the player plays in a bonus gaming mode, even if another player tries to play the gaming machine device 10 without permission wile the player temporarily moves away from the device, it is possible to quickly detect the fraudulent activities.

When the player 103 inserts an ID card, by collating the face image data obtained by photographing with the face image data of the player registered in the ID card, the player can be authenticated even if the player information or the like registered in the hall computer 40 is deleted. When the number of players 103 to be registered is increased, a data amount to be recorded in the hall computer 40 becomes enormous necessitating time and labor for data management. However, the data management is facilitated by recording the face image data in an ID card which each player can own.

### (Counting Device Side Process Routine)

Referring to a flowchart of FIG. 19, a control operation in the counting device 30 is described. The control unit 80 of the counting device 30 first determines insertion of medals into the medal receiving portion 31 of the counting device 30 (F1). Specifically, determination is made as to reception of a detection signal from the medal counting sensor 31S disposed in the medal receiving portion 31. If no medals have been inserted (F1: NO), the process stands by until medals are inserted. If medals have been inserted (F1: YES), a counting process is started (F2). Specifically, detection signals received from the medal counting sensor 31S are counted to count the number of inserted medals, and a counting result is displayed on the count display unit 33

Next, the counting person 104 is photographed by the CCD camera 32 (F3), and the face detection image process is executed to obtain face image data of the counting person 104 (F4). The obtained face image data of the counting person 104, and the counting device information containing the medal count value obtained in the counting process of F2 are transmitted to the hall computer 40 (F5). Then, determination is made as to pressing of the receipt issuance button 34 (F6). If the receipt issuance button 34 has not been pressed (F6: NO), the process stands by until it is operated. If the receipt issuance button 34 has been pressed (F6: YES), the printing and ejecting portions of the printing unit 36 are driven and controlled to print a medal count value on a receipt and to issue a receipt from the receipt discharge slot 35 (F7). Then, the process returns to F1 to repeat the above process.

The data stored in the ID card may be compared with the data obtained by the counting device 30 by configuring the counting device 30 to enable insertion of the ID card, and storing the number of medals obtained by the player in the ID card. In this case, even when communication cannot be carried out with the hall computer 40 because of a network trouble or the like, face authentication of the counting person 104 and collation of the number of obtained medals can be executed. By receiving a signal in the case of nonmatching of the number of obtained medals or face images in a counting person monitor process described below in the hall computer 40, printing of the receipt may be inhibited at the issuance unit 30b. In this case, it is possible to prevent fraudulent activities with the counting device 30.

### (Hall Computer Process Routine)

Referring to a flowchart of FIG. 20, a control operation of the control unit 90 of the hall computer 40 is described. Upon reception of data from the gaming machine device 10 or the counting device 30, the control unit 90 of the hall computer 40 executes a process routine of FIG. 20 to first determine reception of registration information (S1). If the registration information has been received (S1: YES), an information registration process is executed (S2).

### (Information Registration Process Routine)

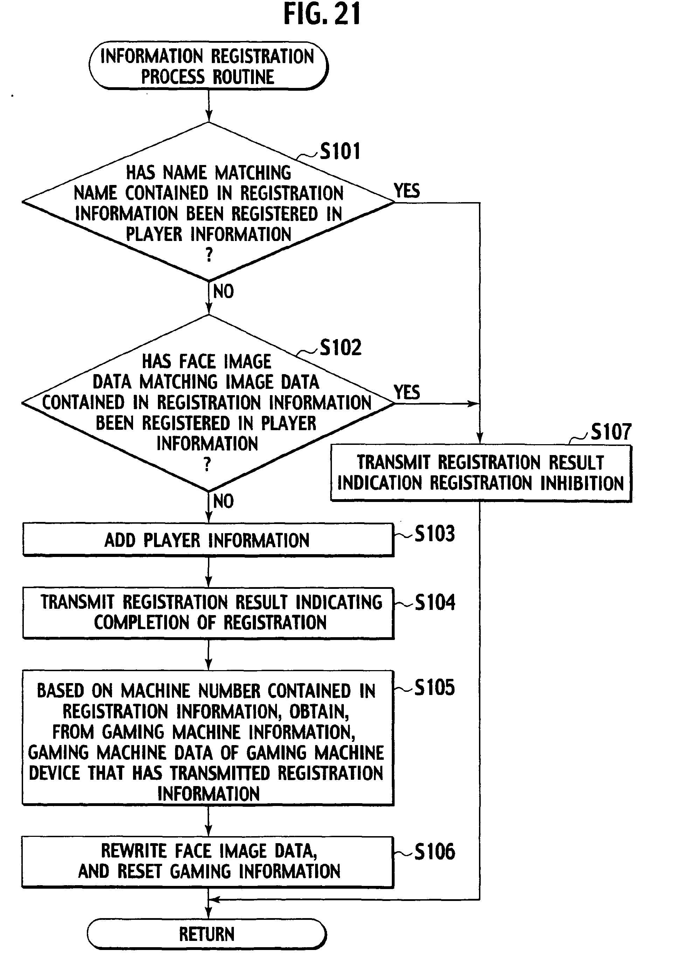

In the information registration process (S2), an information registration process routine shown in FIG. 21 is executed. First, determination is made as to whether a name contained in the received registration information has been registered in the player information of the storage device 97 (S101). If the name has been registered (S101: YES), by judging that the registered name has been registered by another player, a registration result indicating registration inhibition is transmitted to the gaming machine device 10 which has transmitted the registration information (S107). In this case, the screen of FIG. 9B is displayed on the liquid crystal monitor 25. Then, this routine is finished to return to S1 of FIG. 20. Accordingly, it is possible to prevent repeated registration of the name used as a mail transmission destination, and to accurately transmit the mail to the transmission destination when it is transmitted.

On the other hand, if the name has not been registered (S101: NO), then, determination is made as to whether face image data matched with the face image data contained in the registration information has been registered or not in the player information (S102). Specifically, a partial image taken out of each part of the face image data contained in the registration information is compared with a partial image obtained from the face image data stored in the player information, and determination is made as to the storage of the matched face image data.

If the matched face image data has been registered (S102: YES), by judging that the player who has currently executed the registration process has been subjected to a registration process, a registration result indicating registration inhibition is transmitted to the gaming machine device 10 which has transmitted the registration information (S107) . In this case, the screen of FIG. 9C is displayed on the liquid crystal monitor 25 of the medal lending device 10b. Then, this routine is finished to return to S1 of FIG. 20. Accordingly, it is possible to prevent repeated registration by the same player, and to prevent the possibility of error occurrence in player management.

On the other hand, if no matched face image has been registered (S102: NO), by judging that a new player has executed a registration process, player data is added to the player information based on the received registration information (S103). Accordingly, the new player can be registered in the hall computer 40. Next, a registration result indicating registration completion is transmitted to the gaming machine device 10 which has transmitted the registration information (S104). In this case, the screen of FIG. 9A is displayed on the liquid crystal monitor 25 of the medal lending device 10b, and an ID card is issued.

Subsequently, based on the machine number contained in the registration information, gaming machine data of the gaming machine device 10 that has transmitted the registration information is obtained from the gaming machine information (S105). Specifically, gaming machine data having a machine number matching with the machine number contained in the registration information is obtained from the gaming machine information data table stored in the storage device 97 shown in FIG. 12. Then, face image data and a name of the obtained gaming machine data are overwritten with the face image data and the name contained in the registration information, and the gaming information of the gaming machine data is reset (S106) . The resetting of the gaming information is to set the number of paid-out medals to 0. Thus, it is possible to update the gaming machine information, and to specify the player who currently plays the gamingmachine device 10. Then, this routine is finished to return to S1 of FIG. 20.

After returning to S1 of FIG. 20, in S1, if no registration information has been received (S1: NO), then, determination is made as to whether player photograph information has been received (S3). If the player photograph information has been received (S3: YES), first, a player information update process is executed (S4).

### (Player Information Update Routine)

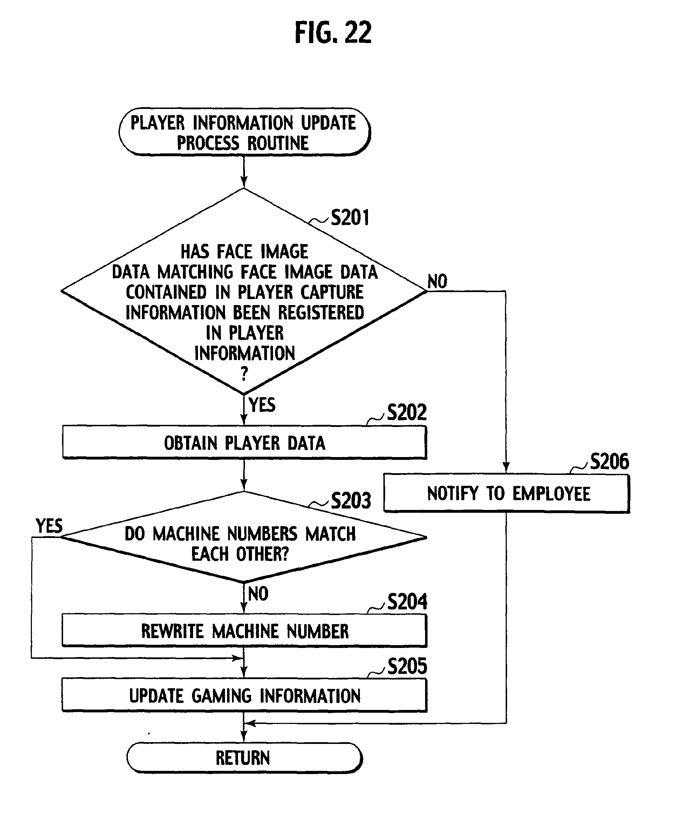

In the player information update process (S4), a player information update routine shown in FIG. 22 is executed. Determination is made as to whether face image data matched with the face image data of the player contained in the received player photograph information has been registered or not in the player information (S201). If the matched face image data has been registered (S201: YES), corresponding player data is obtained (S202). Specifically, player data having face image data matched with the face image data of the player contained in the player photograph information is obtained from the player information shown in FIG. 11. Then, determination is made as to matching between the machine number contained in the player photograph information and a machine number of the obtained player data (S203).

If the machine numbers do not match (S203: NO), by judging that the player has moved to another gaming machine device 10, the machine number of the player data is overwritten with the machine number contained in the player photograph information (S204). Accordingly, even when the player moves from the gaming machine device 10 to play another gaming machine device 10, the gaming machine device 10 can be specified. Subsequently, gaming information of the player data is overwritten with the gaming information contained in the player photograph information (S205). Thus, it is possible to update the number of medals or the like obtained by the player. Then, this routine is finished. On the other hand, if matching between the machine numbers is determined in S203 (S203: YES), by judging that the player has not moved from the gaming machine device 10, the process proceeds to S205 to rewrite only the gaming information. Then, the routine is finished.

If no matched face image data has been registered in S201 (S201: NO), by judging that a possibility of errors due to fraudulent activity or false recognition, because the data is matched with the face image data registered in the ID card (FIG. 18) but has not been registered in the player information in the gaming machine device 10, it is notified to the employee 105 (S206) to finish the routine. Accordingly, in the gaming machine device 10, by collating the face image data of the player obtained by photographing of the CCD camera 24 with both of the face image data registered in the ID card and the face image data registered in the hall computer 40, it is possible to improve reliability of player management, thereby facilitating prevention of fraudulent activities, errors or the like.

Thus, by updating the player information, even when the player 103 moves from the gaming machine device 10 to another gaming machine device 10, the gaming machine device 10 of the moving destination can be specified. Hence, whenmail addressed to the name registered by the player is transmitted, it is not necessary for the player, a sender of the mail, to always find out a gaming machine of a player to whom the sender intends to send the mail. As a result, the player can further concentrate more on games.

### (Gaming Machine Information Update Process Routine)

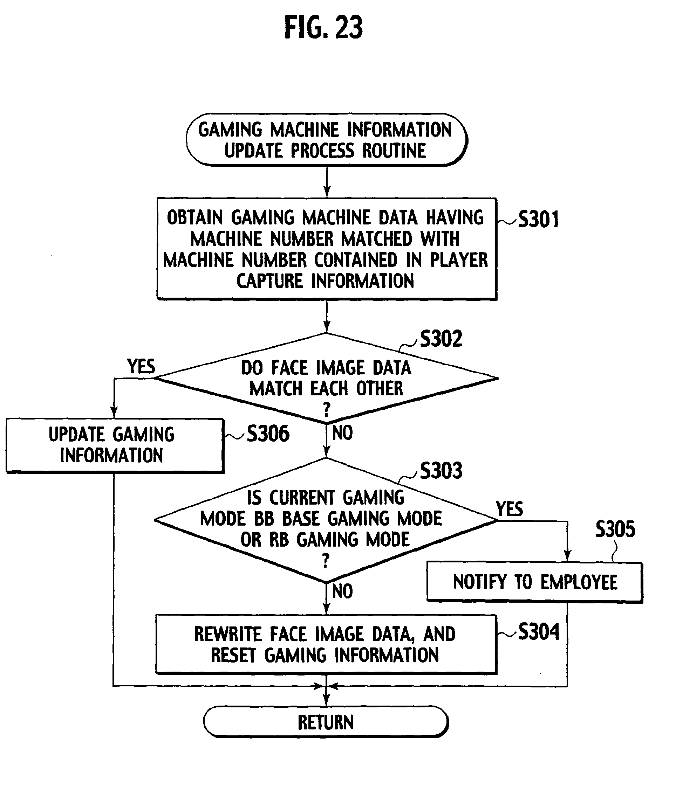

After the end of the player information update process of S4, then, a gaming machine information update process is carried out. In other words, a gamingmachine information update process routine shown in FIG. 23 is executed. First, gaming machine data having a machine number matching with the machine number contained in the received player photograph information is obtained from the gaming machine information (S301). Then, determination is made as to matching between face image data of the obtained gaming machine data and the face image data contained in the player photograph information (S302). If the image data do not match each other (S302: NO), determination (s303) is made from the obtained gaming machine data as to which of a BB base gaming mode and an RB gaming mode a current gaming mode of the gaming machine device 10 is.

If the gaming mode is neither a BB base gaming mode nor an RB gaming mode (S303: NO), the face image data of the obtained gaming machine data is overwritten with the face image data contained in the player photograph information to reset the gaming information of the gaming machine data (S304). Accordingly, even when the player of the gaming machine device 10 is changed, the player can be specified as needed. Then, this routine is finished to return to S1 of FIG. 20.

If the gaming mode is a BB base gaming mode or an RB gaming mode (S303: YES), as the player is changed in a bonus state, it is notified to the employee (5305). Thus, it is possible to prevent another player from starting a game while the player who has played in a bonus state is away from the gaming machine device 10 for some reason. Then, this routine is finished to return to S1 of FIG. 20.

If matching between the face image data is determined in S302 (S302: YES), by judging that the same player still plays the gaming machine, only the gaming information is updated (S306). In other words, the gaming information of the gaming machine data is overwritten with the gaming information contained in the player photograph information. Then, this routine is finished. Subsequently the process returns to FIG. 20, and returns to S1 when the gaming machine information update process is finished. Thus, it is possible to update the gaming machine information and to specify the current player of the gaming machine device 10.

Returning to the process routine of FIG. 20, if no player photograph information has not been received (S3: NO), then, determination is made as to reception of counting device information (S6). If the counting device information has been received (S6: YES), a counting person monitor process is carried out (S7).

### (Counting Person Monitor Process Routine)

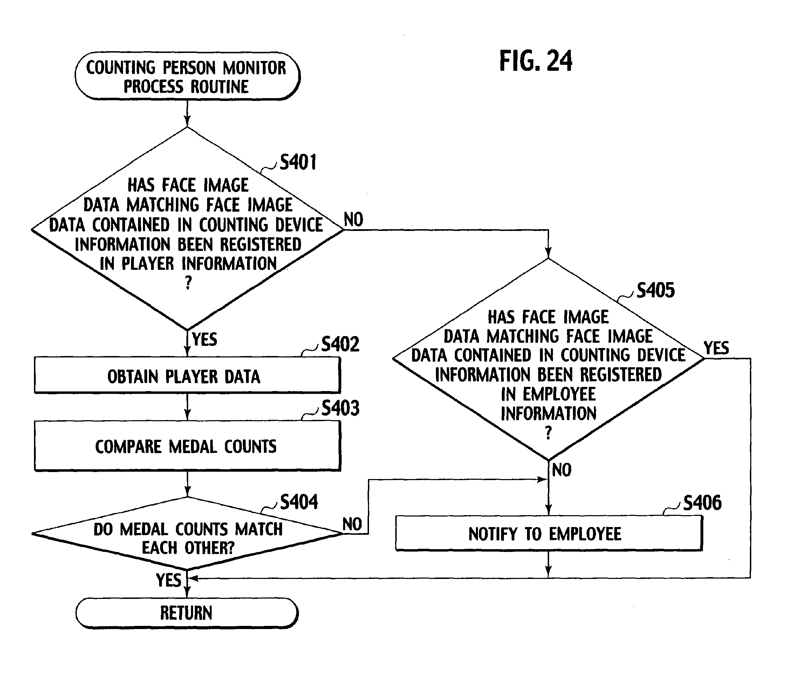

In the counting person monitor process (S7), a counting person monitor process routine shown in FIG. 24 is executed, and determination is made as to whether face image data matched with face image data of a counting person contained in the received counting device information has been registered or not in the player information (S401). If matched image data has been registered (S401: YES), relevant player data is obtained (S402) . Then, the number of paid-out medals contained in the player data is compared with a count value of medals contained in the counting device information (S403) to determine matching therebetween (S404). In other words, determination is made as to matching between the number of medals obtained by the player and the number of medals counted by the counting device. If matching is determined between the numbers of medals (S404: YES), this routine is finished by judging that a state is normal. If nonmatching is determined between the numbers of medals (S404: NO), fraudulent activities, e. g. , a high possibility that medals are brought in from the outside or fraudulently obtained, is notified to the employee 105 (S406). Then, this routine is finished.

In the comparison process of the numbers of medals, if the number of medals counted by the counting device 30 is smaller than the number of medals obtained by the player, for example, if the player finishes a game, and drops medals while carrying them to a counting place 30, it is not a fraud, and thus matching between the numbers of medals may be determined.

In S401, if no face image data has been registered in the player information (S401: NO), then, determination is similarly made as to whether matched face image data has been registered or not in the employee information shown in FIG. 13 (S405). If it has been registered in the employee information (S405: YES), this routine is finished by judging that the employee 105 of the hall 101 counts medals using the counting device 30 in place of the player. If no face image data has been registered (S405: NO), a person who is neither a player nor an employee counts medals using the counting device, and thus it is notified to the employee 105 (S406). Then, this routine is finished. Subsequently, the process returns to S1 of FIG. 20.

Thus, the determination as to registration of the face image data obtained by photographing the person 104 who counts the medals by using the counting device 30 in the storage device 97 of the hall computer 40 helps judge as to whether the medals are those obtained by actual gaming of the counting person 104. Accordingly, it is possible to prevent fraudulent activities with the counting device 30. By comparing the count value of medals counted by the counting device 30 with the number of medals obtained by the counting person 104 (player 103), it is possible to judge whether the player has fraudulently obtained medals.

Returning to the process routine of FIG. 20, if no counter information has been received in S6 (S6: NO), mail reception is judged to execute a mail transmission/reception process (S8).

### (Mail transmission/reception Process Routine)

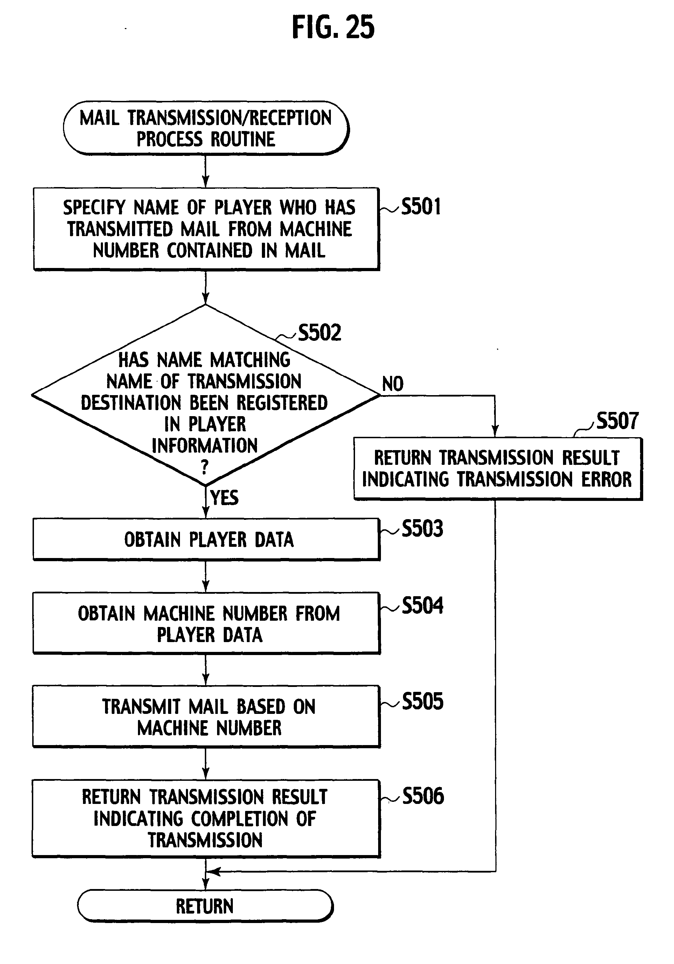

In the mail transmission/reception process (S8), a mail transmission/reception process routine shown in FIG. 25 is carried out. A name of a player who has transmitted mail is specified from the received mail (S501). Specifically, gaming machine data having a machine number matching with a machine number contained in the received mail is obtained from the gaming machine information shown in FIG. 12. Then, a name is obtained from the gaming machine data. Accordingly, the name of the player which has transmitted the mail can be specified. Next, determination is made as to whether a name matching with a name of a transmission destination has been registered in the player information (S502). If it has not been registered (S502: NO), there is no mail transmission destination. Thus, a transmission result indicating a transmission error is returned to the gaming machine device 10 which has transmitted the mail (S507). In this case, the screen of FIG. 10C is displayed on the liquid crystal monitor 25 of the medal lending device 10b. Then, this routine is finished.

If the name has been registered in the player information (S502: YES), player data having the name is obtained (S503), and a machine number is obtained from the player data (S504). Then, based on the machine number, the received mail and the name specified in S501 are transmitted (S505). Subsequently, a transmission result indicating mail transmission completion is returned to the gaming machine device 10 which has transmitted the mail (S506). In this case, the screen of FIG. 10B is displayed on the liquid crystal monitor 25 of the medal lending device 10b. Then, this routine is finished to return to S1 of FIG. 20.

As described above, according to the embodiment of the present invention, there is provided a player authentication device (e.g., the gaming machine body 10a or the medal lending device 10b having the liquid crystal monitor 25 and the CCD camera 24) installed in the gaming machine (e.g., gaming machine body 10a) designed to give a gaming value to the player based on a result of gaming or the sandwiched device (e.g., medal lending device 10b) disposed close to the corresponding gaming machine. The authentication device includes specific information storage units (e.g., ROM 73) for storing gaming machine specifying information (e.g., machine number) to specify the gaming machine itself, an imaging unit (e.g., CCD camera 24) for imaging the player, player face image data generation units (e.g., CPU 71) for extracting a face area or a specific portion of the player based on an imaging result of the imaging unit to generate player face image data, and output units (e.g., CPU 71, communication unit 74) for outputting the generated player face image data together with the gaming machine specifying information.

With this configuration, as the player face image data obtained by imaging the player and the gaming machine specifying information are output, it is possible to find out which gaming machine is played and what player is playing a game. Thus, without any need to go near the gaming machine to check the player, a manager or the like of a game arcade can specify the face of the player in a position away from the gaming machine.

According to the embodiment of the present invention, the imaging unit is configured to image the players at predetermined intervals. As the players are imaged at the predetermined intervals, even when the player of the gaming machine is changed, the player can be specified as needed. Thus, for example, even when another player plays the machine without permission while the player who plays the machine in a gaming mode of obtaining a great amount of gaming values is temporarily away from the machine, by imaging the players at the predetermined intervals, another player different from the previous player can be specified, thereby preventing prevention of fraudulent activities.

According to the embodiment of the present invention, there is provided a player management server (e.g. , hall computer 40) connected, to execute data communication, to the player authentication device installed in each of a plurality of gaming machines (e. g. , gaming machine bodies 10a) or sandwiched devices (e.g., medal lending devices 10b) disposed closely to the corresponding gaming machines. The player management server includes reception unit (e.g., CPU 91, communication unit 94) for receiving the player face image data and the gaming machine specifying information, a storage unit (e.g., storage device 97) for storing the player face image data and the gaming machine specifying information in a correlated manner, a first determination unit (e.g., CPU 91) for determining whether the player face image data received from the gaming machine has been stored in the storage unit, a detection unit (e.g., CPU 91) for detecting the gaming machine specifying information corresponding to the player face image data from the storage unit when the received player face specifying data is determined to have been stored, a second determination unit (e.g., CPU 91) for determining matching of the gaming machine specifying information received together with the player face image data with the gaming machine specifying information detected by the detection unit, and a rewriting unit (e. g. , CPU 91) for rewriting the gaming machine specifying information detected by the detection unit with the received gaming machine specifying information when a determination result of the second determination unit does not match.

With this configuration, the determination is made as to whether the player face image data received from the gaming machine has been stored in the storage unit. When the storage is determined, and when the gamingmachine specifying information corresponding to the player face image data and the received gaming machine specifying information do not match with each other, the gaming machine specifying information is rewritten. Thus, as the data of the storage unit is rewritten when the player of the gaming machine changes, each player who plays games with the gaming machine can be specified. Hence, in a game arcade where changes of players are frequent, the manager or the like of the game arcade can specified the players without any time and labor.

According to the embodiment of the present invention, a notification unit (e.g., display device 96) is disposed to notify it when the data of the storage unit is rewritten. With this configuration, when the player of the gaming machine changes or when the data of the storage unit is rewritten, it is notified. In this case, for example, in a gaming mode of obtaining a great amount of gaming values, by notifying the changing of the player to the game arcade manager, the manager can easily supervise to determine whether the current player plays the machine without any permit from the previous player.

According to the embodiment of this invention, there is provided a player authentication device (e.g., medal lending device 10b) for authenticating a player who plays games with a gaming machine designed to give a gaming value (e.g. , a medal) based on a gaming result. The player authentication device includes a data reader (e.g., CPU 71) for reading face image data registered beforehand by the player from an ID recording medium (e.g., an ID card) inserted by the player, an imaging unit (e.g., CCD camera 24) for imaging a face of the player, a face image data generation unit (e.g., CPU 71) for extracting a face area or a specific portion of the player based on an imaging result of the imaging unit to generate face image data, and an authentication unit (e.g., CPU 71) for collating the face image data generated by the player face image data generation unit with the face image data read from the ID recording medium by the data reader to authenticate that the player is a player registered in the ID recording medium.

With this configuration, by determining matching of the face image data obtained by imaging the player with the face image data read from the ID recording medium, it is possible to authenticate the player who plays games with the gaming machine. For example, the management side of the gaming machine can manage the players by managing the ID recording media, thereby facilitating the management of the players.

When the face image data of the player is registered in a server or the like for managing the gaming machine, and the player is authenticated by collation with the registered data, if a trouble or the like occurs in the network which connects the server with the authentication device, or the data is deleted to disable authentication, the player cannot be authenticated. However, by registering the face image data in the ID recording medium and executing authentication of the player, the player can be authenticated without any network passage. Moreover, when the number of players to be registered is increased, a volume of data to be registered in the server is increased to necessitate much time and labor for data management. However, the data management becomes easier by recording data in an ID recording medium which each player can own.

According to the embodiment of the present invention, there is provided a sandwiched device (e. g. , medal lending device 10b) arranged closely to the corresponding gaming machine (e.g., gaming machine body 10a) designed to give a gaming value to a player based on a gaming result and incorporating a player authentication device to authenticate the player who plays games with the gaming machine. The sandwiched device includes a specific information storage unit (e.g., ROM 73) for storing gaming machine specifying information (e.g., machine number) to specify the gaming machine itself, an imaging unit (e.g., CCD camera 24) for imaging the player, a player face image data generation unit (e.g., CPU 71) for extracting a face area or a specific portion of the player based on an imaging result of the imaging unit to generate player face image data, and output units (e.g., CPU 71, communication unit 74) for outputting the generated player face image data and the gaming machine specifying information.

With this configuration, as the authentication function can be arranged in the sandwiched device configured separately from the gaming machine, the authentication function can be exerted no matter which gaming machine is placed closely to. Thus, by installing the authentication function next to an existing gaming machine or the like, it can be widely employed in any old or new gaming machines.

According to yet another embodiment of the present invention, there is provided a gaming machine (e.g., gaming machine body 10a) incorporating a player authentication device (e.g., CCD camera 24, liquid crystal monitor 25, and the like) for authenticating a player who plays games with the gaming machine designed to give a gaming value (e.g., a medal) to the player based on a gaming result. The gaming machine includes a specific information storage unit (e.g., ROM 63) for storing gaming machine specifying information (e.g., machine number) to specify the gaming machine itself, an imaging unit (e.g., CCD camera 24) for imaging the player, a player face image data generation unit (e.g., CPU 61) for extracting a face area or a specific portion of the player based on an imaging result of the imaging unit to generate player face image data, and output units (e.g., CPU 61, communication unit 64) for outputting the generated player face image data and the gaming machine specifying information.

With this configuration, the imaging unit such as a CCD camera described below can be disposed on the front side of the gaming machine in a state where the player plays game with the gaming machine. Thus, as a possibility that face image data to be compared is in a state of imaging the player from the front is increased when an authentication process is executed by the authentication unit, it is possible to improve authentication accuracy, and to prevent problems such as authentication errors.

The preferred embodiments of the present invention have been described. However, changes can be made without departing from the sprit and scope of the present invention. For example, according to the embodiment, the CCD camera 24 for photographing the player is disposed in the medal lending device 10b. However, it may be disposed in the gaming machine body 10a, or in another device to be integrated with the gaming machine body 10a. The gaming machine body 10a and the medal lending device 10b may be driven and controlled by one control unit.

According to the embodiment of the present invention, the notification unit of the process result is the display device 96 of the hall computer 40. However, for example, the employee 105 may carry a portable device, and fraudulent activity, false recognition, or the like may be notified to the employee 105 through the portable device. According to the embodiment of the present invention, gaming is carried out by inserting the ID card. However, when the ID card is discharged from the card insertion slot 26b, a gaming mode may be forcibly changed to a base gaming mode even in a bonus state. In this case, when the player gains a bonus and stops playing in the middle of play, it is possible to prevent another player from continuing the game to fraudulently obtain medals.

According to the embodiment of the present invention, the player or the counting person is photographed by the CCD camera, the image data is obtained from the photographing result by the gaming machine device 10 or the counting device 30, and the face image data is transmitted to the hall computer 40. However, a configuration may be employed where the face image data is obtained by the hall computer 40, and collated with the face image data stored in the storage device 97. The method of obtaining the face image data and the method of collating the image data are not limited to those of the embodiment.

The preferred embodiments of the present invention have been described. However, the present invention is not limited to the embodiments. Various other embodiments are possible without departing from the spirit and scope of the present invention. The operations and effects of the embodiments of the present invention have been described. However, they are only exemplary, and in no way limitative of the invention.

## Claims

1. A player authentication device installed in a gaming machine (10a) designed to give a gaming value to a player (103) based on a result of a game or a sandwiched device (10b) disposed adjacent to the corresponding gaming machine (10a), the player authentication device comprising:
a specific information storage means (63, 73) for storing gaming machine specifying information to specify the gaming machine (10a) itself;
an imaging means (24) for imaging the player (103);
a player face image data generation means (61, 71) for extracting a face area or a specific portion of the player (103) based on an imaging result of the imaging means (24) to generate player face image data; and
an output means (61, 64, 71, 74) for outputting the generated player face image data and the gaming machine specifying information.

2. The player authentication device according to claim 1, wherein the imaging means images the player (103) at predetermined intervals.

3. A player management server (40) connected to execute data communication to each of a plurality of player authentication devices installed in each of a plurality of gaming machines (10a) or sandwiched devices (10b) disposed adjacent to the corresponding gaming machines (10a), the player management server (40) comprising:
a reception means (91, 94) for receiving player face image data and gaming machine specifying information which are transmitted by the player authentication device;
a storage means (97) for storing the player face image data and the gaming machine specifying information in a correlated manner;
a first determination means (91) for determining whether the player face image data received from the player authentication device has been stored in the storage means (97);
a detection means (91) for detecting the gaming machine specifying information corresponding to the player face image data within the storage means (97), when the received player face specifying data has been stored;
a second determination means (91)for determining matching of the gaming machine specifying information received together with the player face image data with the gaming machine specifying information detected by the detection means (91); and
a rewriting means (91) for rewriting the gaming machine specifying information detected by the detection means (91) with the received gaming machine specifying information, when a determination result of the second determination means (91) is negative.

4. The player management server (40) according to claim 3, further comprising a first notificationmeans (96) for issuing a notification when the rewiring means (91) rewrites data of the storage means (97).

5. The player management server (40) according to claim 3 or 4, further comprising a second notifying means (96) for issuing a notification, when the determination result of the first determination means (91) is negative.

6. A player authentication device for authenticating a player (103) who plays games with a gaming machine designed to give a gaming value based on a result of a game, the player authentication device comprising:
a data reader (71) for reading face image data registered beforehand by the player (103) from an ID recording medium inserted by the player (103);
an imaging means (24) for imaging a face of the player (103);
a face image data generation means (71) for extracting a face area or a specific portion of the player (103) based on an imaging result of the imaging means (24) to generate face image data; and
an authentication means (71) for collating the face image data generated by the player face image data generation means (71) with the face image data read from the ID recording medium by the data reader (71) to authenticate whether the player (103) is a player (103) registered in the ID recording medium.

7. A gaming machine (10a) incorporating a player authentication device for authenticating a player (103) whoplays games with the gaming machine (10a) designed to give a gaming value to the player (103) based on a result of a game, the gaming machine (10a) comprising:
a specific information storage means (63) for storing a gaming machine specifying information to specify the gaming machine (10a) itself;
an imaging means (24) for imaging the player (103);
a player face image data generation means (61) for extracting a face area or a specific portion of the player (103) based on an imaging result of the imaging means (24) to generate player face image data; and
an output means (61, 64) for outputting the generated player face image data and the gaming machine specifying information.

8. A sandwiched device (10b) disposed adjacent to the corresponding gaming machine (10a) designed to give a gaming value to a player (103) based on a result of a game, the sandwiched device (10b) incorporating a player authentication device for authenticating the player (103) who plays games with the gaming machine (10a), the sandwiched device (10b) comprising:
a specific information storage means (71) for storing gaming machine specifying information to specify the gaming machine (10a) itself;
an imaging means (24) for imaging the player (103);
a player face image data generation means (71) for extracting a face area or a specific portion of the player (103) based on an imaging result of the imaging means (24) to generate player face image data; and
an output means (71, 74) for outputting the generated player face image data and the gaming machine specifying information.
